# EUROPEAN PATENT APPLICATION

(11) **EP 1 647 968 A1**
(43) Date of publication of application: **19.04.2006**
(21) Application number: 04746716.2
(22) Date of filing: 23.06.2004
(51) Int. Cl.: G09G 5/36, G09G 5/14, G06F 3/14

(54) **MEDIUM DATA DISPLAY DEVICE, MEDIUM DATA DISPLAY METHOD, AND MEDIUM DATA DISPLAY PROGRAM**

(30) Priority: 11.07.2003 JP 2003273146
(71) Applicant: MATSUSHITA ELECTRIC INDUSTRIAL CO., LTD., Kadoma-shi, Osaka 571-8501 (JP)
(72) Inventor: TOMA, Tadamasa, Toyonaka City Osaka 560-0085 (JP); MATSUI, Yoshinori, Ikoma City, Nar 630-0212 (JP)
(74) Representative: Eisenführ, Speiser & Partner
(86) International application number: PCT/JP2004/009247
(87) International publication number: WO 2005/006305

(57) **Abstract**

The present invention provides a media data display device, a media data display method and a media data display program for displaying, on a display screen, multimedia data made up of a plurality of media including moving images in a variety of display methods. The media data display device (85) is a media data display device for displaying, on a display screen, multimedia data made up of a plurality of media including moving images, and is provided with a scaling determining portion (87), a scaling portion (89) and a display portion (19). The scaling determining portion (87) determines whether to display the moving images after changing their image size or to display the moving images without changing their image size. The scaling portion (89) and the display portion (19) are means for displaying the multimedia data, and display the moving images after switching whether to perform scaling or not based on a determination result from the scaling determining portion (87).

## Description

### Technical Field

The present invention relates to media data display devices, media data display methods and media data display programs, particularly to a media data display device, a media data display method and a media data display program for displaying, on a display screen, multimedia data made up of a plurality of media including moving images.

### Background Art

In recent years, techniques for distributing video, audio or text data and the like over communications networks such as the Internet have been developed. One example is a method in which digitized video, audio or text data and the like is transmitted after being packetized in accordance with a communication protocol such as RTP (Real Time Transport Protocol) and HTTP/TCP (Hyper Text Transport Protocol, Transmission Control Protocol). Conventional methods (see, e.g., JP2002-199370A (page 6)) related to distribution of video, audio or text data and the like are known which use MPEG-4 as the audio and video encoding method and an MP4 (ISO/IEC 14496-1:2001) file as the file format. In the case of RTP or TS (Transport Stream, used in digital broadcasting), an MP4 file is not transmitted as it is, but encoded data itself is packetized and transmitted, whereas in the case of HTTP/TCP, an MP4 file is transmitted as it is.

Conventionally, at the time of displaying video multiplexed in an MP4 file, the video is displayed based on the size of the display area and the image size of the video included in the MP4 file. That is, when the size of the video display area is different from the image size of the video, it is necessary to scale the video image size to the size of the video display area before displaying the video.

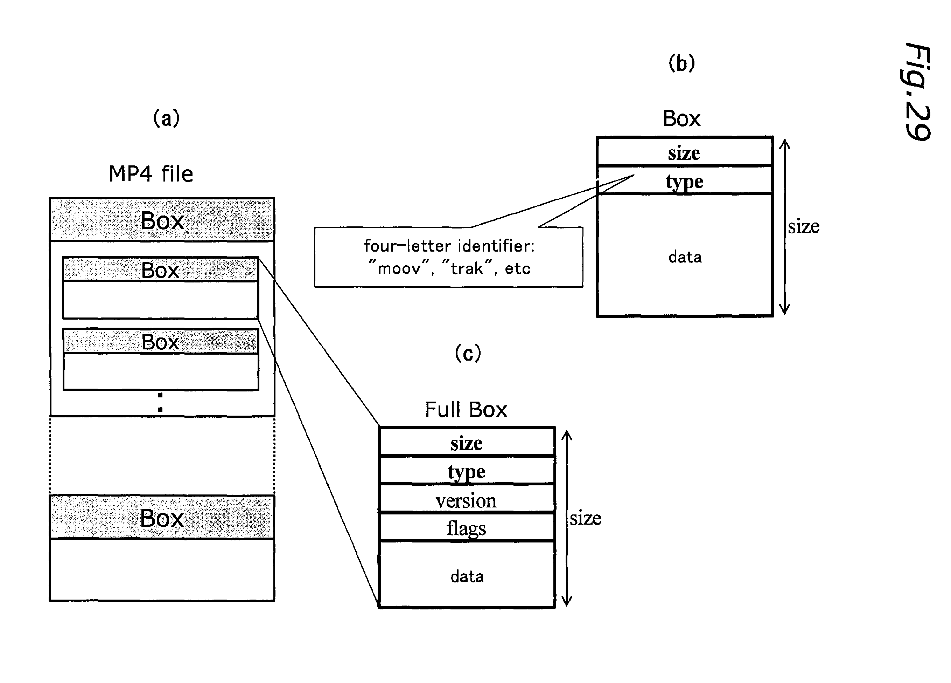

The structure of an MP4 file is described with reference to Figs. 29 to 32, together with a further description of the size of the video display area and the video image size.

Fig. 29 is a diagram illustrating the file structure of an MP4 file. The MP4 file is a group of objects called "Boxes". The boxes are arranged hierarchically (see Fig. 29(a)), and each box is made up of [size], [type] and [data] (see Fig. 29(b)). [size] indicates the data size of the box. [type] stores four letters (e.g., 'moov' or 'trak', which will be described later) for identifying the box. [data] stores data corresponding to [type]. Additionally, many boxes further store [version] and [flags] (see Fig. 29(c)). With this data structure, even when a box of an unrecognizable [type] is acquired, it is possible to advance the processing by ignoring and skipping that box.

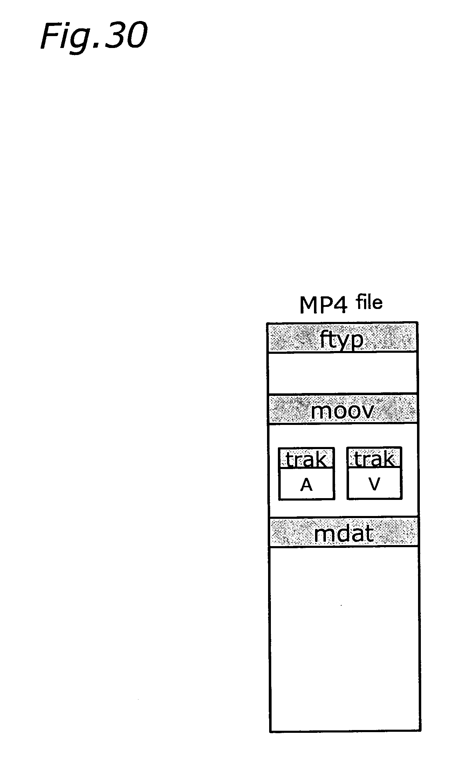

Fig. 30 is a diagram illustrating a method for storing data in the MP4 file. The MP4 file contains File Type Box (hereinafter, referred to as 'ftyp'), Movie Box (hereinafter, referred to as 'moov') and Media Data Box (hereinafter, referred to as 'mdat').

'ftyp' is placed at the beginning of the MP4 file, and indicates an identifier (e.g., [major_brand] or [compatible_brand]) indicating the specification on which the MP4 file is based on. When the MP4 file is based on the 3GPP (Third Generation Partnership Project) standard, for example, [3gp4] or [3gp5] is used. 'moov' stores header information, and a single 'moov' is included in an MP4 file. Specifically, 'moov' includes Movie Header Box (hereinafter, referred to as 'mvhd') (not shown) that stores information (e.g., the time scale and the duration) related to reproduction of media contained in the MP4 file, and Track Box (hereinafter, referred to as 'trak') that stores header information (e.g., the frame size, the frame duration, the initialization information and the data storage area) for each medium. For example, in an MP4 file containing audio and video, an independent 'trak' is present for each medium, such as an audio "trak" and a video "trak". 'mdat' stores data of each medium in media reproduction units called samples (e.g., frames, in the case of video). The stored position of the samples in 'mdat' is specified by 'moov'. In the following, an MP4 file having a structure in which all the header information of various media is stored in 'moov' is described. Although a structure (called a fragment) in which media data is divided into plural sections and header information is attached to each of the divided sections is also defined in MP4, its description has been omitted here.

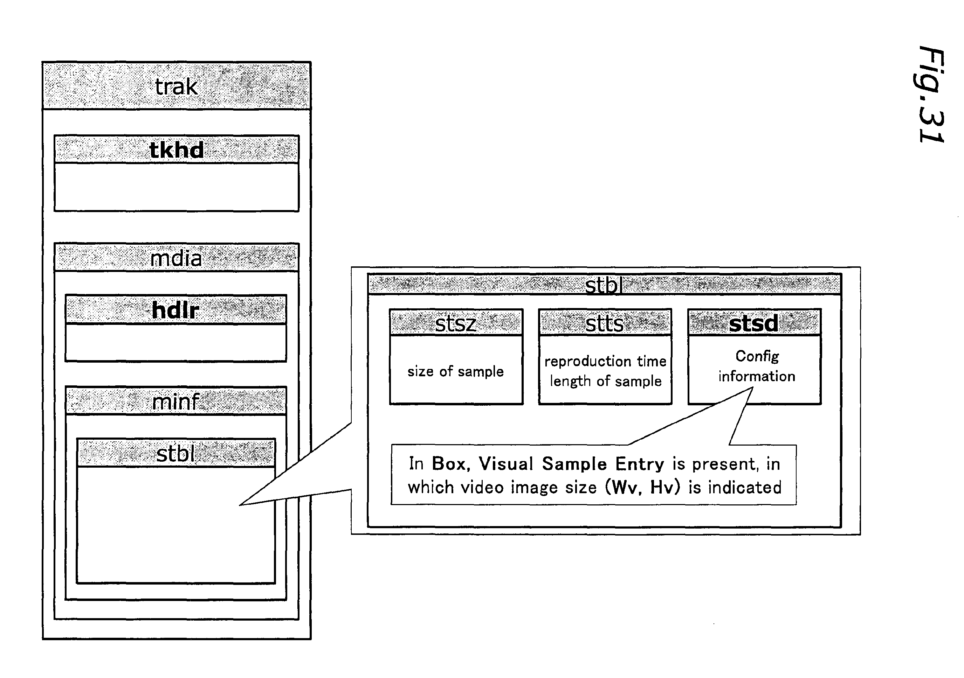

Fig. 31 is a diagram illustrating the structure of 'trak'. 'trak' includes Track Header Box (hereinafter, referred to as 'tkhd') and Media Box (hereinafter, referred to as 'mdia').

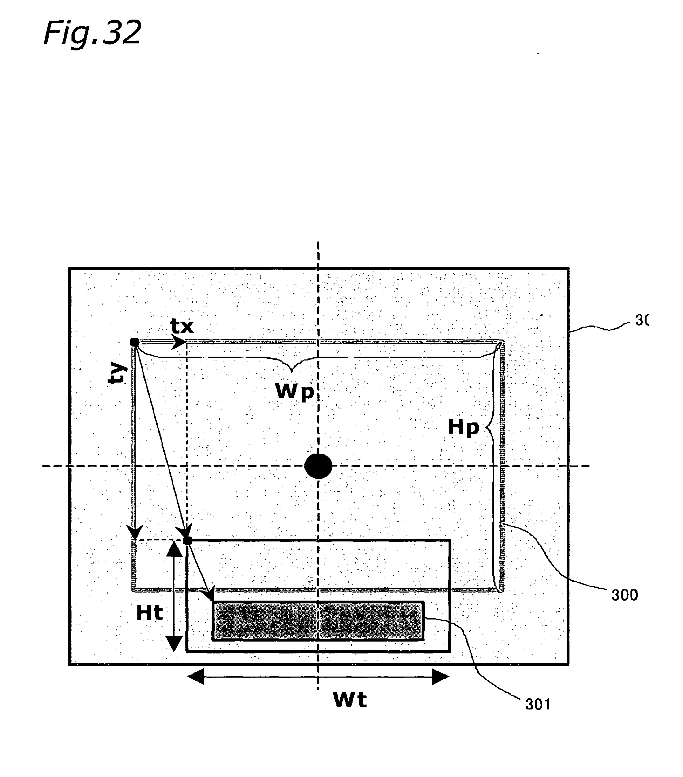

'tkhd' has the size of the video display area (Wp, Hp) in the case of video, or includes coordinates (Tx, Ty) of an upper left point of the text display area that are expressed taking an upper left point of the video display area as a reference and the size of the text display (Wt, Ht) in the case of text. In this regard, Fig. 32 shows the positional relationship between a video display area 300 and a text display area 301. The video display area 300 is set in a display screen 302. The video display area 300 has the size (Wp, Hp). The text display area 301 has the size (Wt, Ht) at the coordinates (Tx, Ty) taking the upper left point of the video display area 300 as a reference.

'mdia' (see Fig. 31) includes Media Header Box (hereinafter, referred to as 'mdhd') (not shown), Handler Reference Box (hereinafter, referred to as 'hdlr') and Media Information Box (hereinafter, referred to as 'minf'). 'mdhd' stores information (e.g., the time scale and the duration) related to reproduction of media stored in 'trak'. 'hdlr' stores an identifier (handler_type such as video [vide], audio [soun] and text [text]) indicating the type of media stored in 'trak'. At the time of reproducing the MP4 file, the type of the media stored in 'trak' is determined by referencing 'hdlr'.

'minf' stores, for example, Video Media Header Box (hereinafter, referred to as 'vmhd') (not shown), Data Information Box (hereinafter, referred to as 'dinf') (not shown) and Sample Table Box (hereinafter, referred to as 'stbl'). 'vmhd' includes basic information related to video display. 'dinf' includes, for example, Data Reference Box (hereinafter, referred to as 'dref') (not shown) indicating the position at which the information of media is stored in 'trak'.

'stbl' includes, for example, Sample Size Box (hereinafter, referred to as 'stsz'), Decoding Time to Sample Box (hereinafter, referred to as 'stts'), Sample Description Box (hereinafter, referred to as 'stsd'), Sample To Chunk Box (hereinafter, referred to as 'stsc') (not shown) and Chunk Offset Box (hereinafter, referred to as 'stco') (not shown).

'stsz' stores the size of each sample. 'stts' stores the reproduction time length of each sample. 'stsd' stores sample reproduction information called Visual Sample Entry in the case of video. Visual Sample Entry stores, for example, a video image size (Wv, Hv). 'stsc' stores information that associates Visual Sample Entry with each sample.

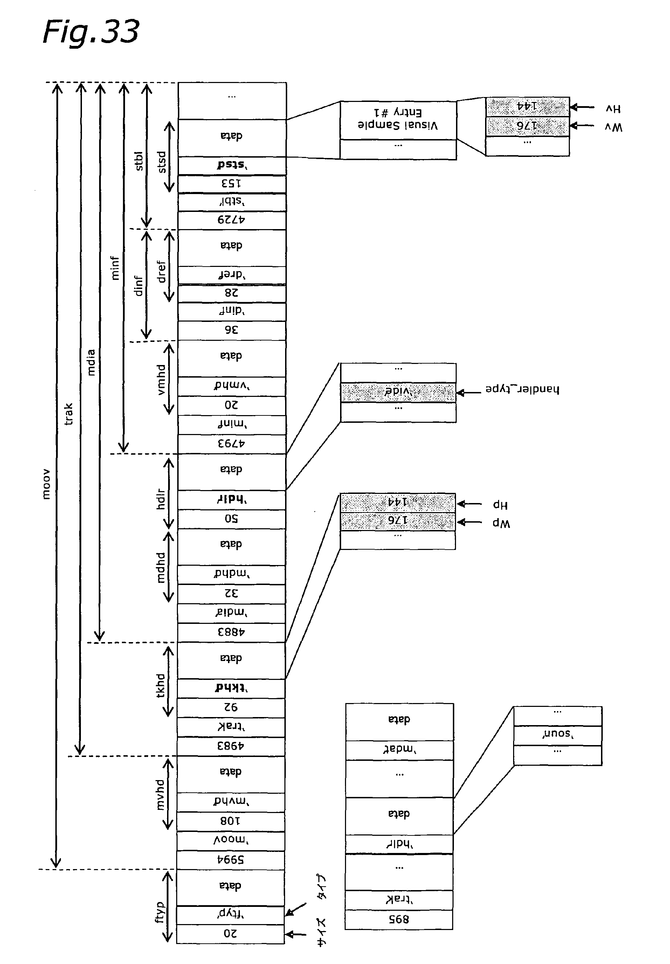

Fig. 33 shows the overall data structure of the above-described MP4 file. The size of the video display area (Wp, Hp) and the video image size (Wv, Hv) are stored as [data] of 'tkhd' and [data] of 'stsd', respectively.

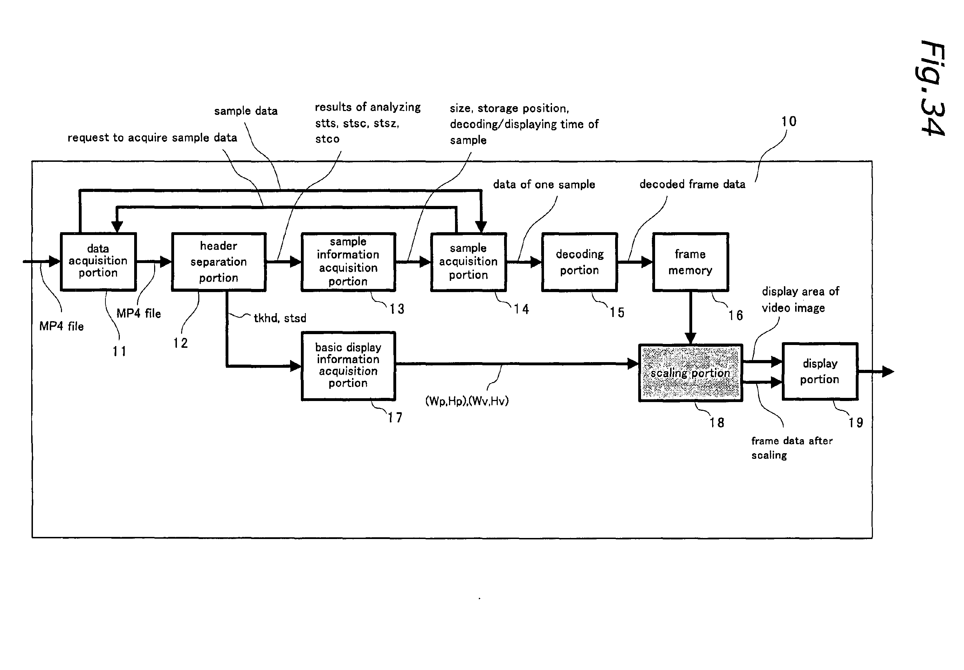

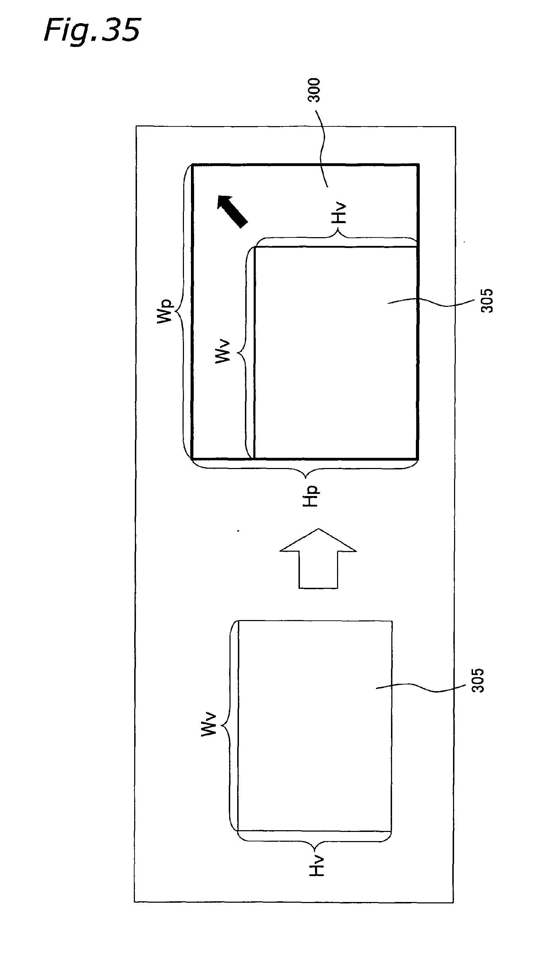

A conventional scaling display for video is described with reference to Figs. 34 and 35.

Fig. 34 is a block diagram illustrating the configuration of a conventional media data display device 10 for MP4 files. The media data display device 10 is, for example, a device that downloads an MP4 file stored in a server by using HTTP and reproduces it, or a device that reproduces an MP4 file stored in a recording medium such as an SD card, and is provided in televisions, personal computers (PCs), mobile phones, or other devices capable of displaying image signals. The media data display device 10 includes a data acquisition portion 11, a header separation portion 12, a sample information acquisition portion 13, a sample acquisition portion 14, a decoding portion 15, a frame memory 16, a basic display information acquisition portion 17, a scaling portion 18 and a display portion 19.

The data acquisition portion 11 acquires an MP4 file. The header separation portion 12 separates, from the MP4 file, sample-related information such as 'stts', 'stsc', 'stsz' and 'stco' and display-related information such as 'tkhd' and 'stsd'. The sample information acquisition portion 13 acquires sample-related information such as 'stts', 'stsc', 'stsz' and 'stco'. The sample acquisition portion 14 acquires, for example, the size, the stored position, the decoding and display time of the sample based on the sample-related information acquired by the sample information acquisition portion 13. Furthermore, it requests the sample data from the data acquisition portion 11 based on the information acquired from the sample information acquisition portion 13. The decoding portion 15 decodes the sample data acquired by the sample acquisition portion 14 for each sample. The frame memory 16 stores the decoded sample data, for example, for each frame. The basic display information acquisition portion 17 acquires display-related information such as 'tkhd' and 'stsd'. Here, 'tkhd' includes the size of the video display area (Wp, Hp), and 'stsd' includes a video image size (Wv, Hv).

The scaling portion 18 acquires the size of the video display area (Wp, Hp) and the video image size (Wv, Hv) from the basic display information acquisition portion 17. Furthermore, it scales frame data having the image size (Wv, Hv) that is stored in the frame memory 16 to the display area size (Wp, Hp) in a fill mode. The display portion 19 acquires the size of the video display area (Wp, Hp) and the scaled frame data from the scaling portion 18, and writes data for video display in a display memory (not shown) or the like.

Fig. 35 is a diagram illustrating scaling. When the image size (Wv, Hv) of frame data 305 stored in the frame memory 16 is different from the display area size (Wp, Hp) acquired by the basic display information acquisition portion 17, the frame data 305 is scaled to the video display area 300 in a fill mode.

### Disclosure of Invention

In the case of the conventional media data display device 10, video is displayed after being scaled to the size of the video display area (Wp, Hp) indicated by 'tkhd'. This results in a uniform display, making it difficult to realize a variety of display methods. Further, in the case of the conventional media data display device 10, scaling needs to be performed for several to several tens of times per second at the time of displaying video, so that the load on the CPU and the electric power consumption are high, which is problematic especially for portable terminals requiring lower power consumption and lower throughput.

It is an object of the present invention to provide a media data display device, a media data display method and a media data display program for displaying, on a display screen, multimedia data comprising a plurality of media including moving images in a variety of display methods.

It is another object of the present invention to provide a media data display device, a media data display method and a media data display program that switch display methods according to the capability of the terminal, the conditions at use and the like.

A media data display device described in claim 1 is a media data display device for displaying, on a display screen, multimedia data comprising a plurality of media including moving images, and comprises a scaling determining means and a media data display means. The scaling determining means determines whether to display the moving images after changing their image size or to display the moving images without changing their image size. The media data display means is a means for displaying multimedia data, and displays the moving images after switching whether to perform scaling or not based on a determination result from the scaling determining means.

Here, "multimedia data" refers to, for example, an MP4 file in which video, audio, text, still images or the like are multiplexed and stored (hereinafter, the same applies in this section).

According to the media data display device of the present invention, the scaling determining means determines whether to perform scaling display, so that the moving images are not uniformly scaled and displayed in a fixed area, but are displayed in a size intended by the creator of the multimedia data. Additionally, it is also possible to display the moving images without scaling them, in which case the processing load on the device can be reduced.

A media data display device described in claim 2 is the media data display device according to claim 1, wherein the scaling determining means makes the determination based on scaling determining information included in the multimedia data.

According to the media data display device of the present invention, the scaling determining means determines whether to perform scaling based on the scaling determining information. Here, the intention of the creator of the multimedia data concerning scaling display is indicated in the scaling determining information, so that the moving images are displayed, reflecting the intention of the creator of the multimedia data.

A media data display device described in claim 3 is the media data display device according to claim 2, wherein the scaling determining information is flag information indicating whether to perform scaling.

According to the media data display device of the present invention, the scaling determining means determines whether to perform scaling, based on the flag information.

A media data display device described in claim 4 is the media data display device according to claim 1, wherein the scaling determining means makes the determination based on the remaining capacity of a battery with which the media data display device is provided. The scaling determining means does not perform scaling display, for example, when the remaining capacity of the battery is low.

According to the media data display device of the present invention, whether to perform scaling is determined according to the remaining battery capacity, so that electric power consumption can be reduced by not performing scaling display, for example, when the remaining battery capacity is low, thereby making it possible to extend the serviceable time of the media data display device.

A media data display device described in claim 5 is the media data display device according to claim 1, wherein the scaling determining means includes a scaling setting means for setting whether to display the moving images after changing their image size or to display the moving images without changing their image size. Here, the scaling setting means, for example, may directly specify whether to perform scaling, or may indirectly specify whether to perform scaling by setting the operations of the media data display device.

According to the media data display device of the present invention, the scaling determining means determines whether to perform scaling display in accordance with the user's settings for the scaling setting means, so that the moving images are displayed, reflecting the user's intention concerning scaling.

A media data display device described in claim 6 is the media data display device according to claim 1, wherein the scaling determining means makes the determination based on an attribute of the moving images. Here, "attribute of the moving image" refers to, for example, the image size or the frame rate of the moving images.

According to the media data display device of the present invention, the scaling determining means determines not to perform scaling when the processing load on the media data display device is high, for example, when the frame rate is high. This prevents an excessive processing load from being applied on the media data display device.

A media data display device described in claim 7 is a media data display device for displaying, on a display screen, multimedia data comprising a plurality of media including moving images, and comprises a scaling means and a media data display means. The scaling means scales the moving images with respect to a moving image display area in which the moving images can be displayed in the display screen, based on scaling specifying information that specifies a method for scaling the moving images. The media data display means is a means for displaying the multimedia data, and displays the moving images scaled by the scaling means in the moving image display area.

According to the media data display device of the present invention, the scaling means scales the moving images in a specified scaling method, so that the moving images are not uniformly scaled and displayed in a fixed area, but are scaled in a variety of scaling methods and displayed.

A media data display device described in claim 8 is the media data display device according to claim 7, wherein the scaling means obtains the scaling specifying information from the multimedia data.

Here, "scaling setting information" refers to, for example, flag information indicating the scaling method to be used or number information indicating the scaling method to be used.

According to the media data display device of the present invention, the scaling means obtains the scaling specifying information from the multimedia data, so that the moving images are scaled and displayed, reflecting the intention of the creator of the multimedia data.

A media data display device described in claim 9 is the media data display device according to claim 7 or 8, and further comprises a scaling determining means for determining whether to display the moving images after changing their image size or to display the moving images without changing their image size. The media data display means displays the moving images after switching whether to perform scaling or not based on a determination result from the scaling determining means.

According to the media data display device of the present invention, the scaling determining means determines whether to perform scaling display, so that the moving images are not uniformly scaled and displayed in a fixed area, but are displayed in a size intended by the creator of the multimedia data. Additionally, it is also possible to display the moving images without scaling them, in which case the processing load on the device can be reduced.

A media data display device described in claim 10 is the media data display device according to claim 7, and further comprises a scaling method setting means for setting the scaling specifying information.

According to the media data display device of the present invention, the scaling method is set by the scaling method setting means, so that the moving images are scaled and displayed, reflecting the intention of the user of the media data display device.

A media data display method described in claim 11 is a media data display method for displaying, on a display screen, multimedia data comprising a plurality of media including moving images, and comprises a scaling determining process and a media data display process. The scaling determining process determines whether to display the moving images after changing their image size or to display the moving images without changing their image size. The media data display process is a process of displaying the multimedia data, and displays the moving images based on a determination result from the scaling determining process.

According to the media data display method of the present invention, the scaling determining process determines whether to perform scaling display, so that the moving images are not uniformly scaled and displayed in a fixed area, but are displayed in a size intended by the creator of the multimedia data. Additionally, it is also possible to display the moving images without scaling them, in which case the processing load on the device can be reduced.

A media data display method described in claim 12 is a media data display method for displaying, on a display screen, multimedia data comprising a plurality of media including moving images, and comprises a scaling process and a media data display process. The scaling process scales the moving images with respect to a moving image display area in which the moving images can be displayed in the display screen, based on scaling specifying information that specifies a method for scaling the moving images. The media data display process is a process of displaying the multimedia data, and displays the moving images scaled by the scaling process in the moving image display area.

According to the media data display method of the present invention, the scaling process scales the moving images in a specified scaling method. Therefore, the moving images are not uniformly scaled and displayed in a fixed area, but are scaled in a variety of scaling methods and displayed.

A media data display program described in claim 13 is a media data display program for performing, with a computer, a media data display method for displaying, on a display screen, multimedia data comprising a plurality of media including moving images, and the media data display program lets the computer perform a media display method comprising a scaling determining process and a media data display process. The scaling determining process determines whether to display the moving images after changing their image size or to display the moving images without changing their image size. The media data display process is a process of displaying the multimedia data, and displays the moving images based on a determination result from the scaling determining process.

According to the media data display program of the present invention, the scaling determining process determines whether to perform scaling display, so that the moving images are not uniformly scaled and displayed in a fixed area, but are displayed in a size intended by the creator of the multimedia data. Additionally, it is also possible to display the moving images without scaling them, in which case the processing load on the device can be reduced.

A media data display program described in claim 14 is a media data display program for performing, with a computer, a media data display method for displaying, on a display screen, multimedia data comprising a plurality of media including moving images, and the media data display program lets the computer perform a media data display method comprising a scaling process and a media data display. The scaling process scales the moving images with respect to a moving image display area in which the moving images can be displayed in the display screen, based on scaling specifying information that specifies a method for scaling the moving images. The media data display process is a process of displaying the multimedia data, and displays the moving images scaled by the scaling process in the moving image display area.

According to the media data display program of the present invention, the scaling process scales the moving images in a specified scaling method. Therefore, the moving images are not uniformly scaled and displayed in a fixed area, but are scaled in a variety of scaling methods and displayed.

The present invention described above provides a media data display device, a media data display method and a media data display program for displaying, on a display screen, multimedia data comprising a plurality of media including moving images in a variety of display methods.

Furthermore, the present invention described above provides a media data display device, a media data display method and a media data display program that switch display methods according to the capability of the terminal, the conditions at use and the like.

### Brief Description of Drawings

Fig. 1 is a block diagram showing the configuration of a media data display device according to a first embodiment of the present invention.
Fig. 2 is a diagram showing the relationship between frame data and a video display area in data for display (the first embodiment).
Fig. 3 is a flowchart showing a media data display method (the first embodiment).
Fig. 4 is a block diagram showing the configuration of a media data display device according to a second embodiment of the present invention.
Fig. 5 is a diagram showing a syntax of 'stdc' (the second embodiment).
Fig. 6 is a diagram showing the relationship between frame data and a video display area in data for display (the second embodiment).
Fig. 7 is a flowchart showing a media data display method (the second embodiment).
Fig. 8 is a diagram showing the relationship between frame data and a video display area in data for display (the second embodiment).
Fig. 9 is a diagram showing the relationship between frame data and a video display area in data for display (the second embodiment).
Fig. 10 is a block diagram showing the configuration of a media data display device according to a modification of the second embodiment of the present invention.
Fig. 11 is a diagram showing the relationship between frame data and a video display area in data for display (a modification of the second embodiment).
Fig. 12 is a block diagram showing the configuration of a media data display device according to a modification of the second embodiment (a modification of the second embodiment).
Fig. 13 is a diagram showing the relationship between frame data and a video display area in data for display (a modification of the second embodiment).
Fig. 14 is a block diagram showing the configuration of a media data display device according to a third embodiment of the present invention.
Fig. 15 is a diagram showing a syntax of 'stsl' (the third embodiment).
Fig. 16 is a diagram showing various scaling methods (the third embodiment).
Fig. 17 is a diagram for illustrating an operation of a scaling portion (the third embodiment).
Fig. 18 is a diagram for illustrating an operation of a scaling portion (the third embodiment).
Fig. 19 is a flowchart showing a media data display method (the third embodiment).
Fig. 20 is a diagram showing a syntax of 'stsl' (the third embodiment).
Fig. 21 is a block diagram showing the configuration of a media data display device according to a modification of the third embodiment.
Fig. 22 is a diagram showing a syntax of 'stsl' (the third embodiment).
Fig. 23 is a block diagram showing the overall configuration of a content serving system (a fourth embodiment).
Fig. 24 shows an example of a mobile phone using a moving image encoding method and a moving image decoding method (the fourth embodiment).
Fig. 25 is a block diagram of the mobile phone (the fourth embodiment).
Fig. 26 shows an example of a digital broadcasting system (the fourth embodiment).
Fig. 27 is a diagram showing a syntax of 'stsl' (other considerations).
Fig. 28 is a diagram illustrating a method for acquiring display-related information from Visual Sample Entry (other considerations).
Fig. 29 shows the file structure of an MP4 file according to the prior art.
Fig. 30 shows a method for storing data in the MP4 file (the prior art).
Fig. 31 is the structure of Track Box (the prior art).
Fig. 32 is a diagram showing the positional relationship between a video display area and a text display area (the prior art).
Fig. 33 shows the data structure of the MP4 file (the prior art).
Fig. 34 is a block diagram showing the configuration of a conventional media data display device (the prior art).
Fig. 35 is a diagram illustrating scaling (the prior art).

### Best Mode for Carrying Out the Invention

In the following embodiments, a media data display method using a media data display device is described. It should be noted that although the display method is described taking video as an example in the following embodiments, the same display method can also be applied to still images in JPEG (Joint Photographic Experts Group), for example.

### First embodiment

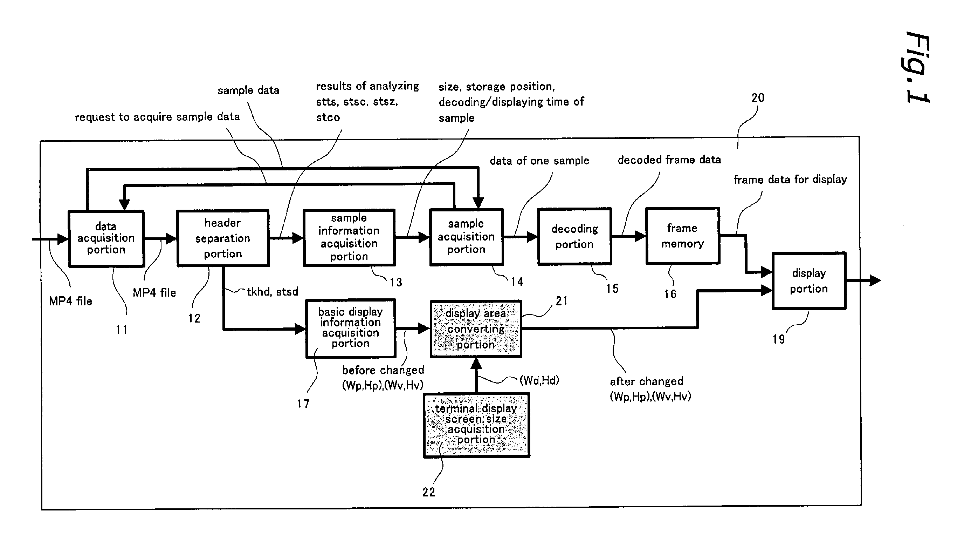

A first embodiment of the present invention is described with reference to Figs. 1 to 3.

Fig. 1 is a block diagram illustrating the configuration of a media data display device 20 according to the first embodiment of the present invention. The media data display device 20 is, for example, a device that downloads an MP4 file (see Figs. 29 to 33, which also applies to the following "Embodiments of the Invention") stored in a server by using HTTP and reproduces it, or a device that reproduces an MP4 file stored in a recording medium such as an SD card, and is provided in televisions, personal computers (PCs), mobile phones, or other devices capable of displaying image signals.

In the case of the conventional media data display device 10, video contained in the MP4 file is displayed after being scaled to the display area size (Wp, Hp) stored in 'tkhd', regardless of the image size (Wv, Hv) stored in 'stsd'. On the other hand, the media data display device 20 does not include the scaling portion 18 (see Fig. 34), and displays video included in the MP4 file without scaling it.

Here, when the size of the video display area is freely set in the media data display device 20, the MP4 file stores a special value (e.g., (Wp, Hp) = (0, 0)) as the display area size stored in 'tkhd'. That is, when the MP4 file has a special value as the display area size (Wp, Hp), it indicates that the size of the video display area is not specified in the MP4 file.

### (1) Configuration of media data display device 20

Those parts of the media data display device 20 shown in Fig. 1 according to the present invention that are different from the conventional media data display device 10 shown in Fig. 34 are described. It should be noted that parts that perform similar operations as in the conventional media data display device 10 are given the same reference numerals, and their description has been omitted.

The media data display device 20 is different from the media data display device 10 in that it includes a display area converting portion 21 and a terminal display screen size acquisition portion 22. The terminal display screen size acquisition portion 22 acquires the display screen size (Wd, Hd) of a display screen (not shown) that displays the data for video display output from the display portion 19. The display area converting portion 21 acquires the display area size (Wp, Hp) stored in 'tkhd' from the basic display information acquisition portion 17. Further, the display area converting portion 21 sets the video display area based on the value of the display area size (Wp, Hp) and the value of the display screen size (Wd, Hd). The display portion 19 outputs data for display such that the video frame data stored in the frame memory 16 is displayed in the video display area set by the display area converting portion 21.

### (2) Operation of display area converting portion 21

Setting of the video display area by the display area converting portion 21 is described in further detail.

If the display area size (Wp, Hp) acquired from the basic display information acquisition portion 17 does not show the special value (0, 0), the display area converting portion 21 sets the acquired display area size (Wp, Hp) as the size of the video display area.

On the other hand, if the display area size (Wp, Hp) acquired from the basic display information acquisition portion 17 shows the special value (0, 0), the display area converting portion 21 sets the display screen size (Wd, Hd) as the size of the video display area.

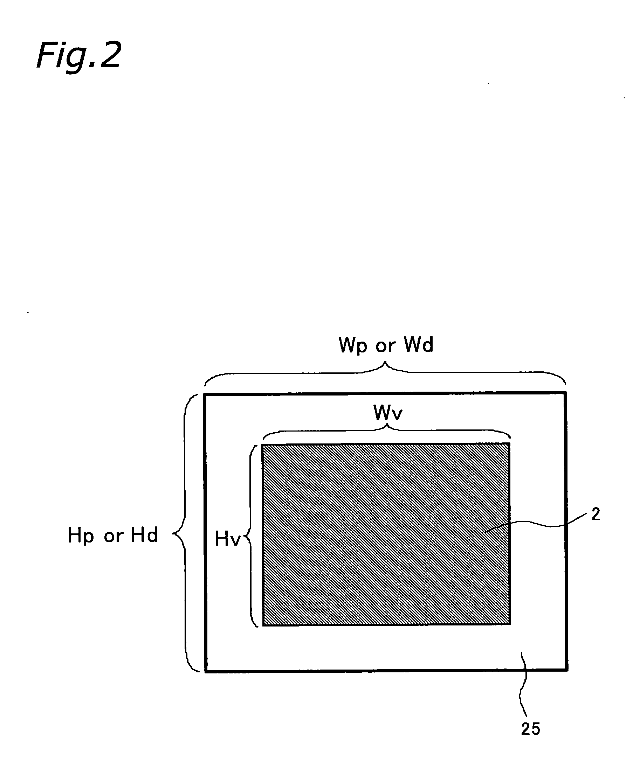

The relationship between the frame data and the video display area in the data for display is described with reference to Fig. 2. Frame data 24 has the image size (Wv, Hv), and is displayed in a video display area 25 without being scaled. The size of the video display area 25 is set to either the display area size (Wp, Hp) or the display screen size (Wd, Hd) by the display area converting portion 21.

In Fig. 2, the frame data 24 is centered in the video display area 25. Here, the position of the frame data 24 relative to the video display area 25 is determined by the display portion 19.

### (3) Media data display method in media data display device 20

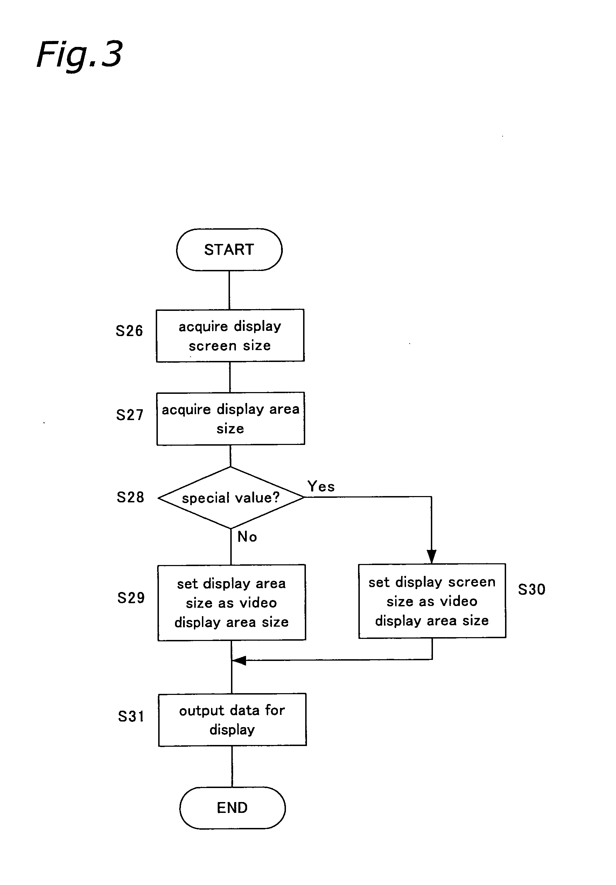

A media data display method in the media data display device 20 is described with reference to Fig. 3.

The display area converting portion 21 acquires the display screen size (Wd, Hd) from the terminal display screen size acquisition portion 22 (step S26). Further, the display area converting portion 21 acquires the display area size (Wp, Hp) stored in 'tkhd' from the basic display information acquisition portion 17 (step S27).

If the display area size (Wp, Hp) acquired from the basic display information acquisition portion 17 does not show the special value (0, 0) (step S28), the display area converting portion 21 sets the acquired display area size (Wp, Hp) as the size of the video display area (step S29). On the other hand, when the display area size (Wp, Hp) acquired from the basic display information acquisition portion 17 shows the special value (0, 0) (step S28), the display area converting portion 21 sets the display screen size (Wd, Hd) as the size of the video display area (step S30).

The display portion 19 outputs data for display such that the frame data stored in the frame memory 16 is displayed in the video display area, without being scaled (step S31).

### (4) Effect of media data display device 20

In the case of the conventional media data display device 10, scaling needs to be performed for several to several tens of times per second at the time of displaying video, so that the load on the CPU and the electric power consumption are high. On the other hand, in the case of the media data display device 20 according to the embodiment of the present invention, it is not necessary to perform scaling, thus making it possible to reduce the throughput and the electric power consumption. This is effective especially in cases where the media data display device 20 is provided in mobile phones and the like.

Furthermore, in the case of the media data display device 20, it is possible to set the size of the video display area according to the size of the display screen if the acquired display area size (Wp, Hp) shows a special value. Accordingly, it is possible to display the video in an appropriate size.

In MPEG-4 AVC (Advanced Video Coding), the image size (Wv, Hv) of frame data changes in the middle of video. In the case of the media data display device 20, the image size does not necessarily need to be scaled to (Wp, Hp) at the time of displaying such video, so that it is possible to display the video according to the image size (Wv, Hv) of the frame data.

### (5) Modifications of media data display device 20

The present invention is not limited to the above-described embodiment, and various modifications may be made thereto as long as they do not depart from the spirit of the invention.

### (5-1) First modification of display area converting portion 21

### (5-1-1)

If the display area size (Wp, Hp) acquired from the basic display information acquisition portion 17 shows the special value (0, 0), the display area converting portion 21 may set the size of the video display area after acquiring the display screen size (Wd, Hd) and the display area size of text, still images or the like included in 'trak'.

In this case, it is possible to set the video display area, taking into consideration the display areas of other media.

### (5-1-2)

If the display area size (Wp, Hp) acquired from the basic display information acquisition portion 17 shows the special value (0, 0), the display area converting portion 21 may set the size of the video display area according to the processing capability (the CPU frequency, the memory size, the data transmission speed and the bus speed) of the media data display device 20.

In this case, if there is enough processing capability left, it is possible to display the video in a larger area.

### (5-1-3)

If the display area size (Wp, Hp) acquired from the basic display information acquisition portion 17 shows the special value (0, 0), the display area converting portion 21 may set the video display area in a predetermined size. Specifically, the media data display device 20 may further include a size setting portion that allows the user to set the size of the video display area, and may set the video display area in the set size, or may set the video display area in a size that has been set according to the operation state of the media data display device 20, such as a power saving mode.

In this case, it is possible to display the video as intended by the user.

### (5-2) Second modification of display area converting portion 21

If the display area size (Wp, Hp) acquired from the basic display information acquisition portion 17 does not show the special value (0, 0) and if the display area size (Wp, Hp) is different from the display screen size (Wd, Hd), the display area converting portion 21 may set the size of the video display area to the display screen size (Wd, Hd).

In this case, it is possible to always display the video in a size appropriate for the display screen.

### (5-3) Modification of display portion 19

In the description of Fig. 2, it was stated that "the frame data 24 is centered in the video display area 25". Here, the frame data 24 does not necessarily need to be centered.

In the description of Fig. 2, it was also stated "the position of the frame data 24 relative to the video display area 25 is determined by the display portion 19". Here, the media data display device 20 may include a display position determining portion that determines the display position of the frame data 24. In this case, the display portion 19 acquires the display position from the display position determining portion, and outputs data for display.

### Second embodiment

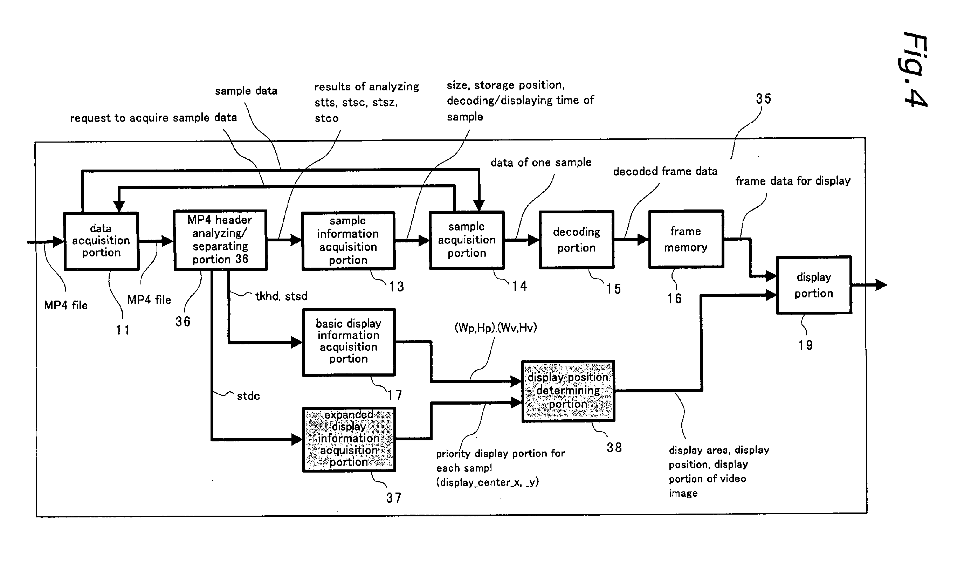

A second embodiment of the present invention is described with reference to Figs. 4 to 13.

Fig. 4 is a block diagram illustrating the configuration of a media data display device 35 according to the second embodiment of the present invention. The media data display device 35 is, for example, a device that downloads an MP4 file stored in a server by using HTTP and reproduces it, or a device that reproduces an MP4 file stored in a recording medium such as an SD card, and is provided in televisions, personal computers (PCs), mobile phones, or other devices capable of displaying image signals.

Similarly to the media data display device 20 described with reference to Fig. 1, the media data display device 35 does not include the scaling portion 18 (see Fig. 34), and displays video included in an MP4 file without scaling it.

Here, the MP4 file acquired by the media data display device 35 stores, in 'stbl', Sample Display Center Box (hereinafter, referred to as 'stdc') that specifies the area to be displayed with priority for each video frame data.

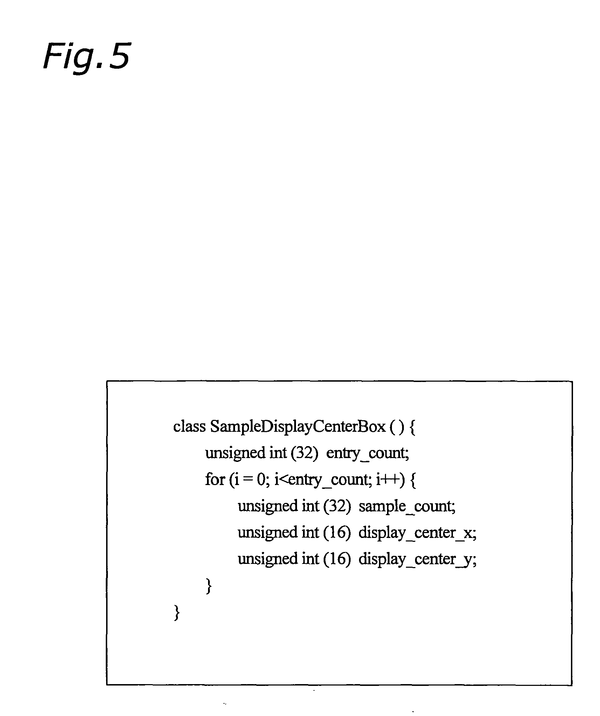

Fig. 5 shows an example of the syntax of 'stdc'. 'stdc' has the same structure as that of the box described with reference to Fig. 29(b). Here, [entry_count] indicates the number of entries included in 'stdc'. [sample_count] indicates the number of consecutive samples whose values of [display_center_x] and [display_center_y] are identical. [display_center_x] and [display _center_y] represent the X-coordinate and the Y-coordinate of the center of the area to be displayed with priority for each sample (e.g., each frame data), respectively. Hereinafter, the coordinates represented by (display_center_x, display_center_y) are referred to as "priority display coordinates", and described as (dcx, dcy). It should be noted that the method for specifying the priority area is not limited to this method, and it may also be specified by the coordinates of the two apexes on the same diagonal line, for example. It is also possible to specify the priority area by ranking the priority. Furthermore, it is also possible to classify image areas using an index other than the priority, or to specify the priority area for larger units, for example, for each chunk or track, each of which is a group of a plurality of samples.

### (1) Configuration of media data display device 35

Those parts of the media data display device 35 shown in Fig. 4 according to the present invention that are different from the conventional media data display device 10 shown in Fig. 34 are described. It should be noted that parts that perform similar operations as in the conventional media data display device 10 are given the same reference numerals, and their description has been omitted.

The media data display device 20 is different from the media data display device 10 in that it includes an expanded display information acquisition portion 37 and a display position determining portion 38. In addition, a header separating portion 36 can recognize and separate 'stdc' included in an MP4 file.

The expanded display information acquisition portion 37 acquires 'stdc' separated by the header separating portion 36, and outputs priority display coordinates (dcx, dcy) for each frame data. The display position determining portion 38 acquires the display area size (Wp, Hp) stored in 'tkhd' and the image size (Wv, Hv) stored in 'stsd' from the basic display information acquisition portion 17, and acquires the priority display coordinates (dcx, dcy) from the expanded display information acquisition portion 37. The display position determining portion 38 determines the display position of the frame data in the video display area such that the priority display coordinates (dcx, dcy) of the frame data having the image size (Wv, Hv) coincide with the center of the video display area having the display area size (Wp, Hp). The display portion 19 outputs data for display such that the frame data stored in the frame memory 16 is displayed at the display position determined by the display position determining portion 38.

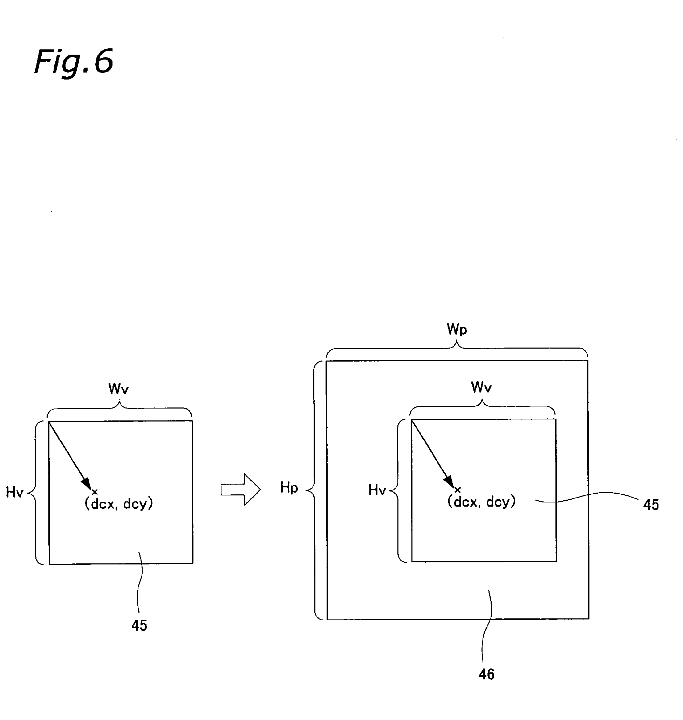

The relationship between frame data 45 and a video display area 46 in the data for display is described with reference to Fig. 6. It should be noted that the display area size (Wp, Hp) is larger than the image size (Wv, Hv) in Fig. 6, so that the entire moving image is shown. The frame data 45 has the image size (Wv, Hv), and is displayed in the video display area 46 without being scaled. The video display area 46 has the display area size (Wp, Hp). The display position of the frame data 45 is determined such that the priority display coordinates (dcx, dcy) coincide with the center of the video display area.

### (2) Media data display method in media data display device 35

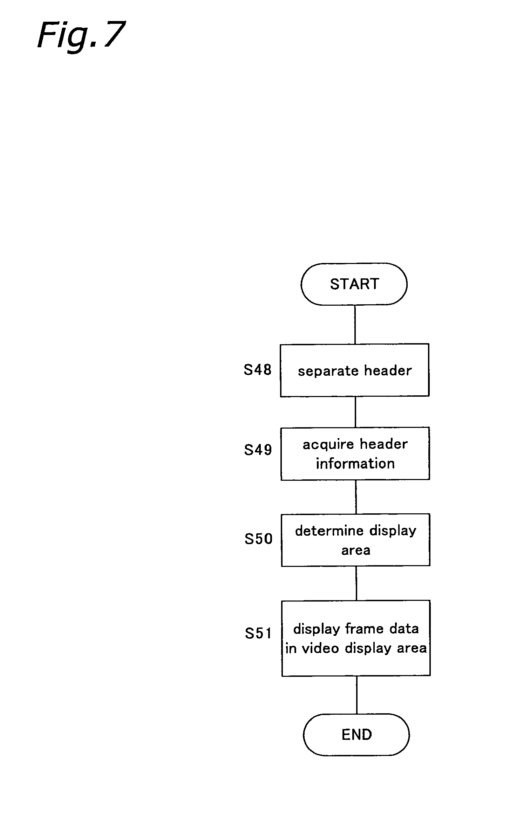

A media data display method in the media data display device 35 is described with reference to Fig. 7.

The header separating portion 36 separates 'tkhd', 'stsd' and 'stdc' from an MP4 file (step S48). The display position determining portion 38 acquires the display area size (Wp, Hp) stored in 'tkhd' and the image size (Wv, Hv) stored in 'stsd' from the basic display information acquisition portion, and acquires the priority display coordinates (dcx, dcy) stored in 'stdc' from the expanded display information acquisition portion 37 (step S49). Furthermore, the display position determining portion 38 determines the display position of the frame data in the video display area based on the acquired display area size (Wp, Hp), image size (Wv, Hv) and priority display coordinates (dcx, dcy) (step S50). The display portion 19 outputs data for display such that the frame data stored in the frame memory 16 is displayed at the display position determined by the display position determining portion 38, without being scaled (step S51).

### (3) Effect of media data display device 35

In the case of the conventional media data display device 10, scaling needs to be performed for several to several tens of times per second at the time of displaying video, so that the load on the CPU and the electric power consumption are high. On the other hand, in the case of the media data display device 35 according to the embodiment of the present invention, scaling does not need to be performed, making it possible to reduce the throughput and the electric power consumption. This is effective especially in cases where the media data display device 35 is provided in mobile phones and the like.

Since the display position determining portion 38 determines the display position of moving images in the media data display device 35, the moving images can be displayed at an appropriate position by the display portion 19.

Furthermore, with the media data display device 35, an important portion can be displayed with priority for each sample (each frame data). Particularly, the area to be displayed with priority is changed for each sample if the display area size (Wp, Hp) is smaller than image size (Wv, Hv), making it possible to realize a highly visually effective display that reflects the intention of the content provider. Additionally, this effect can be similarly achieved when the priority area is specified for larger units, for example, for each chunk or track, each of which is a group of a plurality of samples. Furthermore, when the priority area is specified for each chunk or track, the processing load can be reduced as compared with when it is specified for each sample.

In MPEG-4 AVC (Advanced Video Coding), the image size (Wv, Hv) of frame data changes in the middle of video. In the case of the media data display device 35, such video can be displayed according to the image size (Wv, Hv) of the frame data.

The MP4 files that are taken as a basis of the present invention include 'stdc', which has been newly defined. Therefore, when an MP4 file including 'stdc' is acquired in the conventional media data display device 10, which is not enabled for 'stdc', 'stdc' is not recognized and is skipped. That is, a data structure for an MP4 file is provided that does not affect the display of the conventional media data display device 10 and realizes a novel function for a device capable of recognizing 'stdc'.

### (4) Modifications of media data display device 35

### (4-1) Modification of display position determining portion 38

### (4-1-1)

In the case where the display position determining portion 38 determines the display position such that the priority display coordinates (dcx, dcy) coincide with the center of the video display area when the image size (Wv, Hv) is smaller than the display area size (Wp, Hp), it may automatically adjust the determined display position if there is enough room in the video display area.

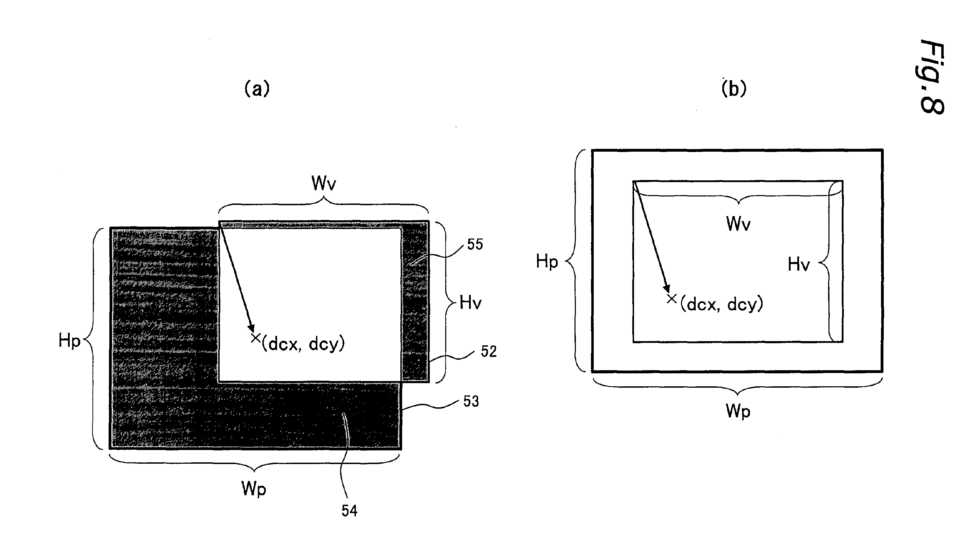

The relationship between frame data 52 and a video display area 53 is described with reference to Fig. 8. Fig. 8(a) shows the positional relationship between the frame data 52 and the video display area 53 in the case where the display position is determined such that the priority display coordinates (dcx, dcy) of the frame data 52 coincide with the center of the video display area 53. In this case, the video display area 53 has a display margin 54, and the frame data 52 has a non-display area 55.

Therefore, the display position of the frame data 52 is adjusted such that the video display area 53 includes the priority display coordinates (dcx, dcy) and displays as large an area as possible of the frame data 52. Fig. 8(b) shows the positional relationship between the adjusted frame data 52 and the video display area 53.

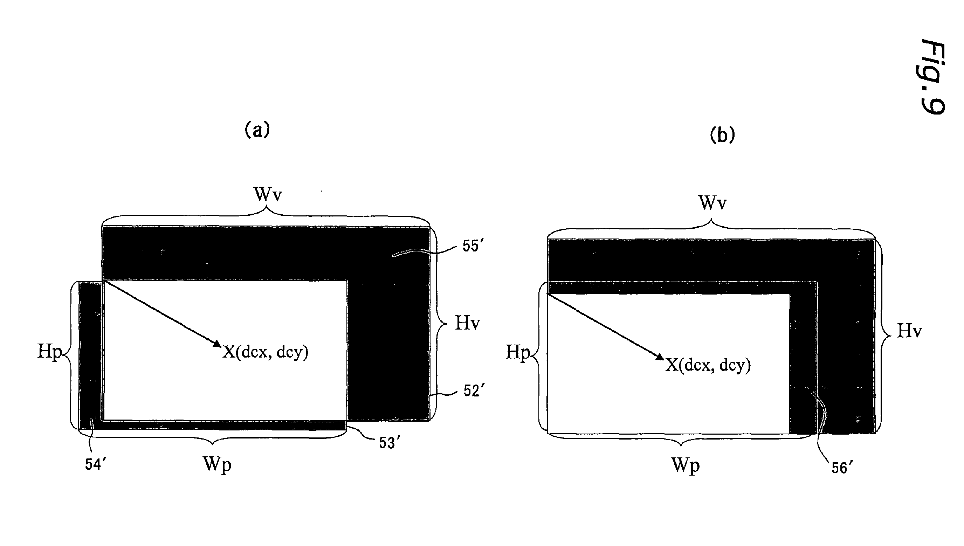

Another example of the relationship between frame data 52' and a video display area 53' is described with reference to Fig. 9. It should be noted that although the image size (Wv, Hv) is smaller than the display area size (Wp, Hp) in the example shown in Fig. 8, the image size (Wv, Hv) is larger than the display area size (Wp, Hp) in this example. Fig. 9(a) shows the positional relationship between the frame data 52' and the video display area 53' in the case where the display position is determined such that the priority display coordinates (dcx, dcy) of the frame data 52' coincide with the center of the video display area 53'. In this case, the video display area 53' has a display margin 54', and the frame data 52' has a non-display area 55'.

Therefore, the display position of the frame data 52' is adjusted such that the video display area 53' includes the priority display coordinates (dcx, dcy) and displays as large an area as possible of the frame data 52'. Fig. 9(b) shows the positional relationship between the adjusted frame data 52' and the video display area 53'. In this case, although not all of the frame data 52' is displayed, the priority display area is reliably displayed and a gray area 56' is additionally displayed.

This makes it possible to effectively utilize the video display area and to display more information, in addition to realizing a highly visually effective display that reflects the intention of the content provider.

### (4-1-2)

The display position determining portion 38 may obtain the display area size (Wp, Hp) stored in 'tkhd' and the image size (Wv, Hv) stored in 'stsd' from the basic display information acquisition portion 17, and may skip 'stdc' when the display area size (Wp, Hp) is larger than the image size (Wv, Hv). In that case, display is performed in accordance with the operation described in (4-2) below.

### (4-2) Determination of display position in the case of not using 'stdc'

When the MP4 file does not include 'stdc', or when the media display device is a device that cannot recognize 'stdc', it is necessary to determine the display position of the video in the video display area.

### (4-2-1)

The operation of the media data display device 35 when the MP4 file does not include 'stdc' is described below.

When the display position determining portion 38 cannot acquire the priority display coordinates (dcx, dcy) for each frame data from the expanded display information acquisition portion 37, it determines the display position of the frame data such that a predetermined point (e.g., the upper left, the upper right, the lower left, the lower right or the center) of the video display area coincides with a predetermined point (e.g., the upper left, the upper right, the lower left, the lower right or the center) of the frame data.

This makes it possible to determine the display position of the frame data even when the MP4 file does not include 'stdc'.

### (4-2-2)

Further, when the media data display device cannot interpret 'stdc', the display position of the frame data may be determined in accordance with a user instruction.

### <1>

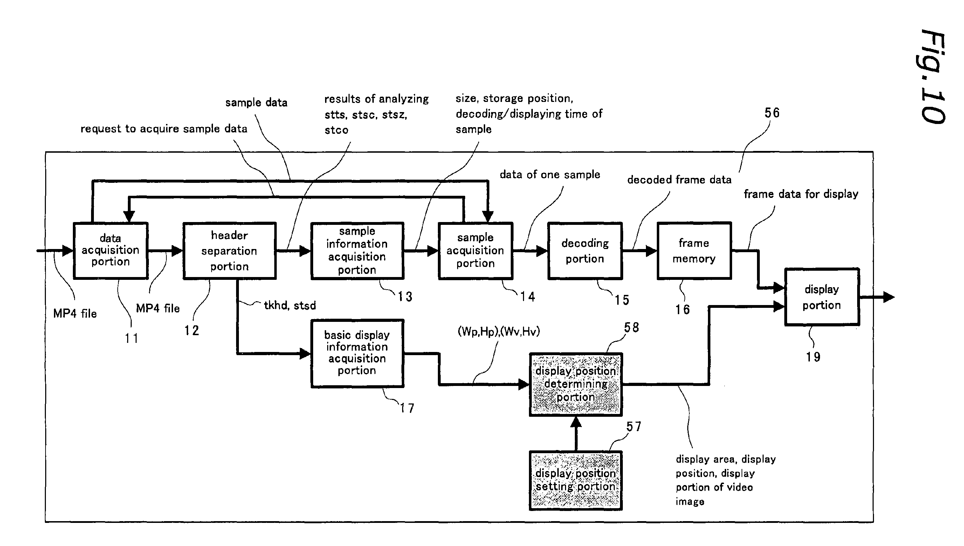

Fig. 10 is a block diagram illustrating the configuration of a media data display device 56 according to a modification of the second embodiment. Similarly to the media data display device 20 described with reference to Fig. 1, the media data display device 56 does not include the scaling portion 18 (see Fig. 34), and displays video included in an MP4 file without scaling it.

Those parts of the media data display device 56 shown in Fig. 10 that are different from the conventional media data display device 10 shown in Fig. 34 are described. It should be noted that parts that perform similar operations as in the conventional media data display device 10 are given the same reference numerals, and their description has been omitted.

The media data display device 56 is different from the media data display device 10 in that it includes a display position setting portion 57 and a display position determining portion 58.

The display position setting portion 57 allows the user to set the display position of the frame data. For example, it allows the user to select the display position from [center, top justify, bottom justify, right justify, left justify] and the like. The display position determining portion 58 acquires the display area size (Wp, Hp) stored in 'tkhd' and the image size (Wv, Hv) stored in 'stsd' from the basic display information acquisition portion 17. Furthermore, it determines the display position of the frame data in the video display area based on the setting made by the display position setting portion 57. The display portion 19 outputs data for display such that the frame data stored in the frame memory 16 is displayed at the display position determined by the display position determining portion 58.

### <2>

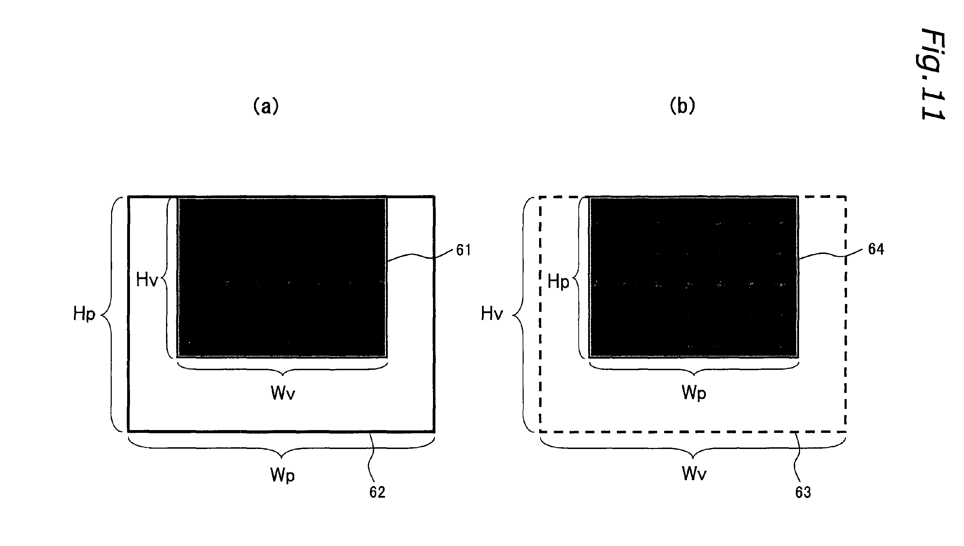

The relationship between frame data 61 and a video display area 62 in the data for display is described with reference to Fig. 11(a). The frame data 61 has the image size (Wv, Hv), and is displayed in the video display area 62 without being scaled. The video display area 62 has the display area size (Wp, Hp). When [top justify] is selected with the display position setting portion 57, the display position is determined such that the top side of the frame data 61 coincides with the top side of the video display area. In addition, the horizontal position is determined such that the frame data 61 is centered with respect to the video display area 62.

It should be noted that Fig. 11(a) shows a case where the display area size (Wp, Hp) is larger than the image size (Wv, Hv). If the display area size (Wp, Hp) is smaller than the image size (Wv, Hv), only a portion of frame data 63 that is included in a video display area 64 is displayed. Fig. 11(b) shows the relationship between the frame data 63 and the video display area 64 for the case where [top justify] is selected with the display position setting portion 57.

### <3>

With this media data display device 56, it is possible to realize a more effective display that reflects the user's intention.

### <4>

Additionally, the display position setting portion 57 may allow the user to input display position data (e.g., the layout and the size), in addition to allowing the user to select the display position from [center, top justify, bottom justify, right justify, left justify] and the like.

### (4-2-3)

The media data display device may also determine the display position of frame data based on the display position of media (e.g. text and still images) other than video that are included in the MP4 file.

It should be noted that display may be performed in accordance with a user instruction or a predetermined display method, even when the media data display device can interpret 'stdc'.

### <1>

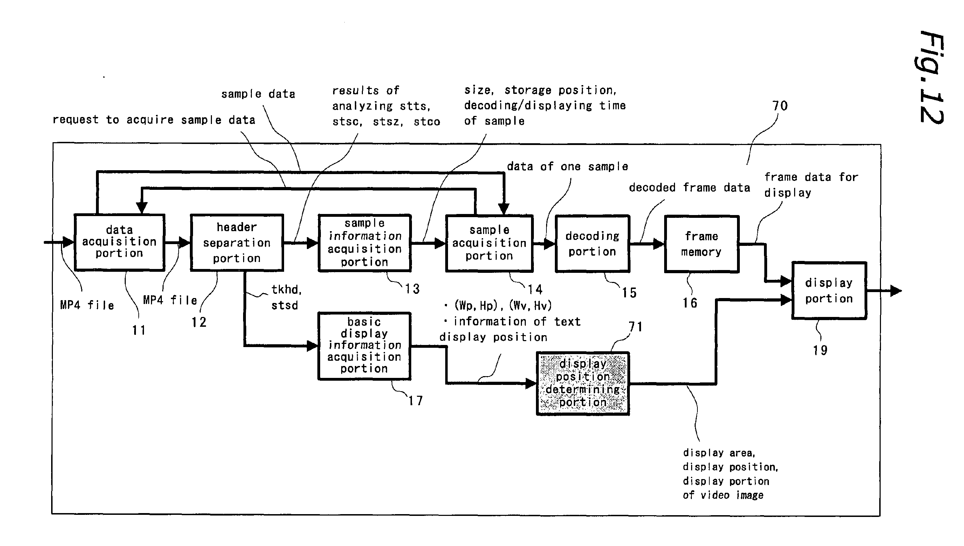

Fig. 12 is a block diagram illustrating the configuration of a media data display device 70 according to a modification of the second embodiment. Similarly to the media data display device 20 described with reference to Fig. 1, the media data display device 70 does not include the scaling portion 18 (see Fig. 34), and displays video included in an MP4 file without scaling it.

Those parts of the media data display device 70 shown in Fig. 12 that are different from the conventional media data display device 10 shown in Fig. 34 are described. It should be noted that parts that perform similar operations as in the conventional media data display device 10 are given the same reference numerals, and their description has been omitted.

The media data display device 70 is different from the media data display device 10 in that it includes a display position determining portion 71.

The display position determining portion 71 acquires the display area size (Wp, Hp) stored in 'tkhd' of the video and the image size (Wv, Hv) stored in 'stsd' of the video from the basic display information acquisition portion 17. Furthermore, it acquires the display position (Tx, Ty) of the text display area and the display area size (Wt, Ht) of the text display area that are stored in 'tkhd' of the text. In addition, the display position determining portion 71 determines the display position of the frame data in the video display area based on the acquired information. Specifically, it determines the position in the vertical direction such that the upper end of the text display area coincides with the lower end of the frame data, and determines the position in the horizontal direction such that the center of the text display area coincides with the center of the frame data. The display portion 19 outputs data for display such that the frame data stored in the frame memory 16 is displayed at the video display position determined by the display position determining portion 71.

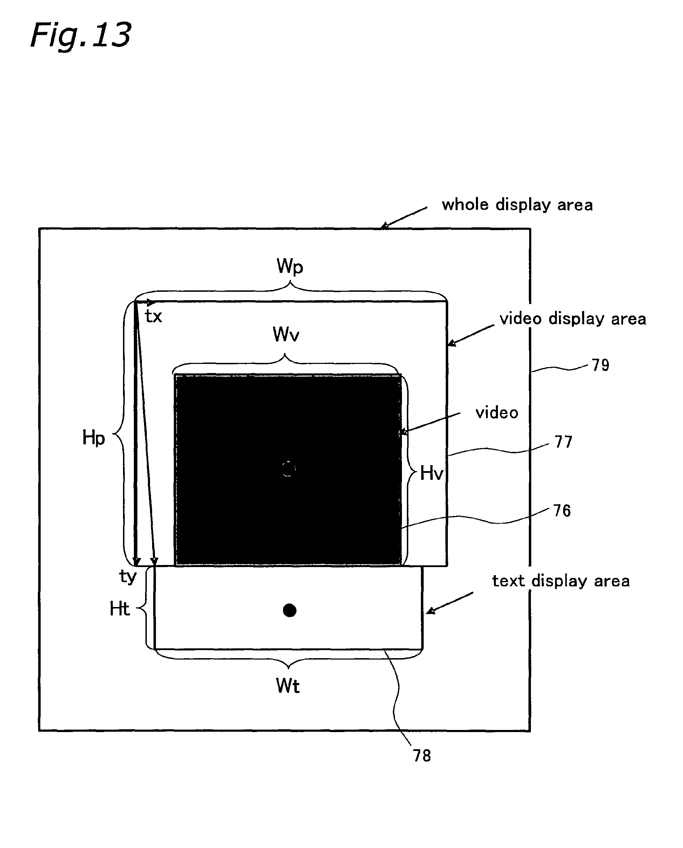

The positional relationship between frame data 76, a video display area 77 and a text display area 78 in the data for display is described with reference to Fig. 13. The video display area 77 having the display area size (Wp, Hp) is set in a display screen 79. Additionally, the text display area 78 having the display area size (Wt, Ht) at the coordinates (Tx, Ty) taking the point at the upper left of the video display area 77 as a reference is set.

Here, the display position in the vertical direction of the frame data 76 having the image size (Wv, Hv) is determined so as to be above and adjacent to the text display area 78. Further, the display position in the horizontal direction of the frame data 76 is determined such that the position in the horizontal direction of the center of the frame data 76 coincides with that of the center of the text display area 78.

### <2>

In the case of the media data display device 70, the display position of the frame data is determined based on the display positions of media (e.g., text and still images) other than video that are included in the MP4 file. Accordingly, each medium is displayed at an appropriate position, improving the visibility of information display.

It should be noted that although the frame data was described as being displayed so as to be above and adjacent to the text display area, the effect of the present invention is not particularly limited to the upward direction, and can also be achieved when it is below and adjacent or adjacent in other directions.

In addition, the display position of the frame data may also be determined based not only on the display position (Tx, Ty) of the text display area and the display area size (Wt, Ht) of the text display area that are stored in 'tkhd' of text, but on the display position of a text sample in the text display area as well.

### Third embodiment

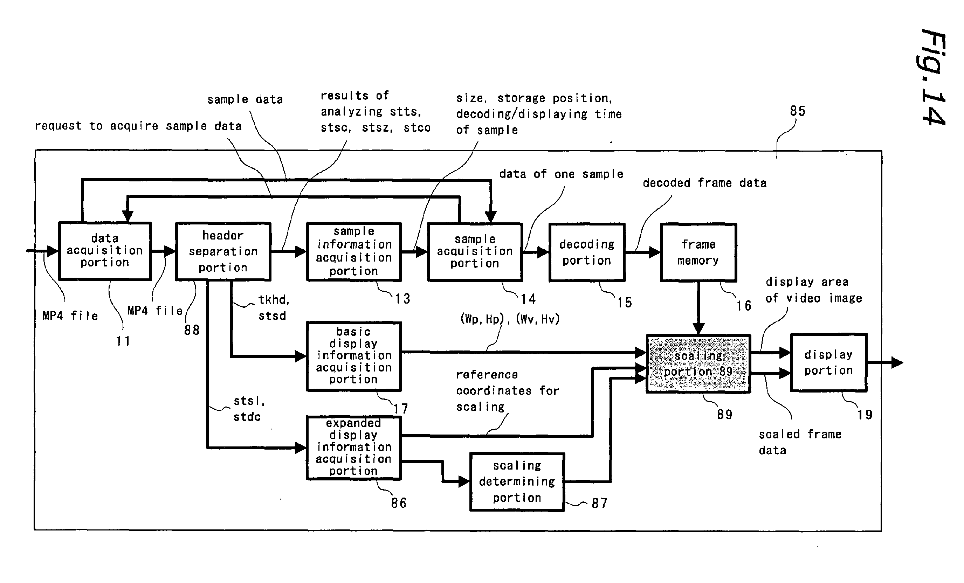

A third embodiment of the present invention is described with reference to Figs. 14 to 22.

Fig. 14 is a block diagram illustrating the configuration of a media data display device 85 according to the third embodiment of the present invention. The media data display device 85 is, for example, a device that downloads an MP4 file stored in a server by using HTTP and reproduces it, or a device that reproduces an MP4 file stored in a recording medium such as an SD card, and is provided in televisions, personal computers (PCs), mobile phones, or other devices capable of displaying image signals.

The media data display device 85 determines whether to scale video frame data based on information acquired from the MP4 file.

Here, the MP4 file acquired by the media data display device 85 may include 'stdc', which has been described in "Second embodiment" with reference to Fig. 5. In addition, the MP4 file acquired by the media data display device 85 may include, in 'stbl', Sample Scale Box (hereinafter, referred to as 'stsl'), which specifies the scaling method for each sample (each frame data). It should be noted that specification of the scaling method is not limited to being performed for each sample, and may be performed for larger units, for example, for each chunk or track, each of which is a group of a plurality of samples. In this case, the processing load can be reduced as compared with when the scaling method is specified for each sample.

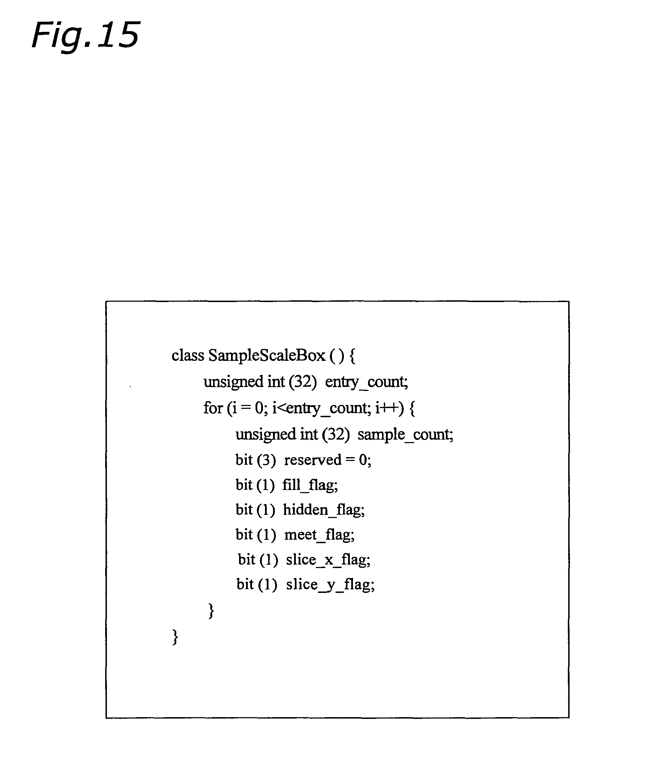

Fig. 15 shows an example of the syntax of 'stsl'. 'stsl' has the same structure as that of the box described with reference to Fig. 29(b). Here, if [fill_flag] is set, then scaling in a fill mode is specified. If [hidden_flag] is set, then scaling in a hidden mode is specified. If [meet_flag] is set, then scaling in a meet mode is specified. When [slice_x_flag] is set, then scaling in a slice mode on the X-axis (in the horizontal direction of the screen) is specified. If [slice_y_flag] is set, then scaling in a slice mode on the Y-axis (in the vertical direction of the screen) is specified. It should be noted that at most one of [fill_flag], [hidden_flag], [meet_x_flag], [meet_y_flag], [slice_x_flag] and [slice_y_flag] is always set in 'stsl'.

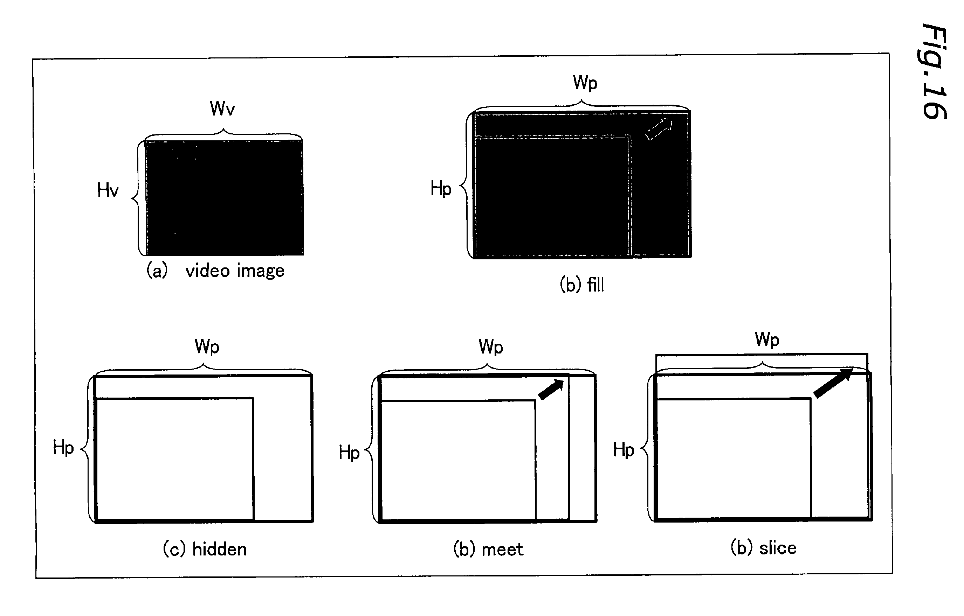

Each of the scaling methods is further described with reference to Fig. 16.

The fill mode is a mode in which frame data (see Fig. 16(a)) having the image size (Wv, Hv) is displayed after being scaled to the display area size (Wp, Hp) (see Fig. 16(b)).

The hidden mode is a mode in which a portion of frame data (see Fig. 16(a)) having the image size (Wv, Hv) that can be displayed within a video display area having the display area size (Wp, Hp) is displayed, without being scaled (see Fig. 16(c)). More specifically, in the case of (Wv < Wp) or (Hv < Hp), a specific background color is displayed in a portion of the video display area in which the frame data is not displayed. On the other hand, in the case of (Wv > Wp) or (Hv > Hp), the frame data that protrudes beyond (Wp, Hp) is clipped.

The meet mode is a mode in which the frame data is displayed after being scaled until it is equal to the video display area in one of the vertical and horizontal dimensions, while maintaining the aspect ratio (the ratio of the vertical and horizontal dimensions [Wv:Hv] of the image). A specific background color is displayed in a portion of the video display area in which the frame data is not displayed. In this mode, the frame data will not be clipped.

In the slice mode, the frame data is displayed after being scaled until it is equal to the video display area in the vertical or horizontal dimension, while maintaining the aspect ratio (the ratio of the vertical and horizontal dimensions [Wv:Hv] of the image). A specific background color is displayed in a portion of the video display area in which the frame data is not displayed. In this mode, the frame data may be clipped.

### (1) Configuration of media data display device 85

Those parts of a media data display device 85 shown in Fig. 14 according to the present invention that are different from the conventional media data display device 10 shown in Fig. 34 are described. It should be noted that parts that perform similar operations as in the conventional media data display device 10 are given the same reference numerals, and their description has been omitted.

The media data display device 85 is different from the media data display device 10 in that it includes an expanded display information acquisition portion 86 and a scaling determining portion 87. Furthermore, a header separating portion 88 is capable of recognizing and separating 'stdc' and 'stsl' included in the MP4 file. In addition, a scaling portion 89 is capable of performing scaling based on a determination result from the scaling determining portion 87.

The expanded display information acquisition portion 86 acquires 'stdc' and 'stsl' separated by the header separating portion 88. The scaling determining portion 87 determines to perform scaling if the expanded display information acquisition portion 86 acquires 'stsl'. The scaling portion 89 acquires the display area size (Wp, Hp) stored in 'tkhd' and the image size (Wv, Hv) stored in 'stsd' from the basic display information acquisition portion 17, and acquires the priority display coordinates (dcx, dcy) (see Fig. 5) stored in 'stdc' and the scaling method stored in 'stsl' from the expanded display information acquisition portion 37. Furthermore, the scaling portion 89 acquires the determination result from the scaling determining portion 87, and performs scaling if the determination result is positive. The scaled frame data is output to the display portion 19, together with the display area size (Wp, Hp) of the frame data.

### (2) Operation of scaling portion 89

The scaling operation of the scaling portion 89 is further described. The scaling portion 89 performs scaling based on the priority display area information stored in 'stdc'. Specifically, 'stdc' stores the priority display coordinates (dcx, dcy), which are the coordinates of the central point of the priority display area. Accordingly, the scaling portion 89 estimates the priority display area from the priority display coordinates (dcx, dcy), and automatically adjusts the display position such that the priority display area is displayed in a video display area having the display area size (Wp, Hp). More specifically, the scaling portion 89 selects an appropriate scaling method such that no portion of the priority area will be omitted.

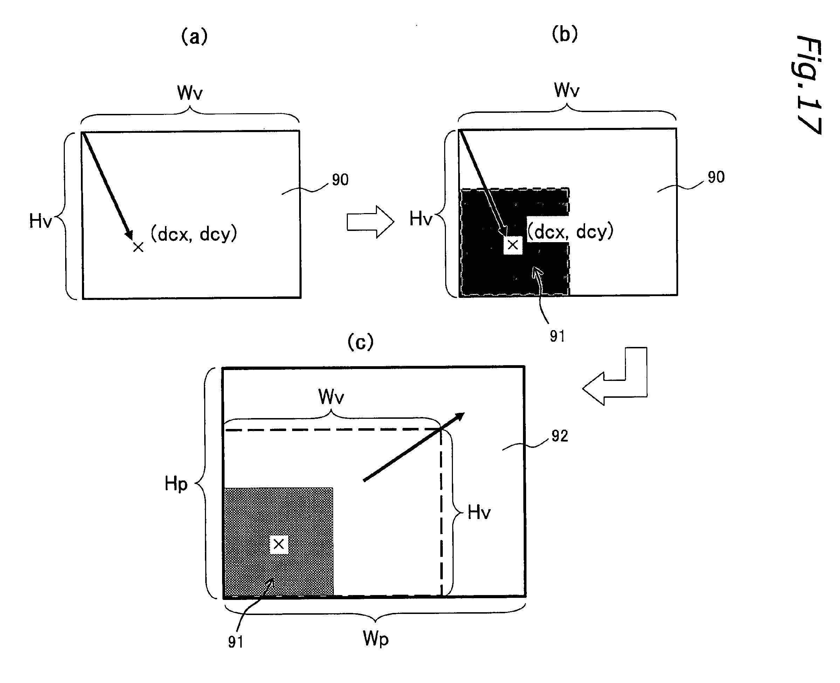

This will be more specifically described with reference to Fig. 17. Here, the priority display coordinates (dcx, dcy) are acquired for frame data 90 having the image size (Wv, Hv) (see Fig. 17(a)). The scaling portion 89 takes, as a priority display area 91, an area centering on the priority display coordinates (dcx, dcy) that is maximal in the frame data 90 (see Fig. 17(b)). In this case, the priority display area 91 is located at the lower left portion of the frame data 90. If the scaling method acquired by the scaling portion 89 is the fill mode, the scaling portion 89 scales the priority display area 91 in the slice mode, for example, in the x direction to the same size as the display area size (Wp, Hp) (see Fig. 17(c)). Consequently, the priority display area 91 is displayed.

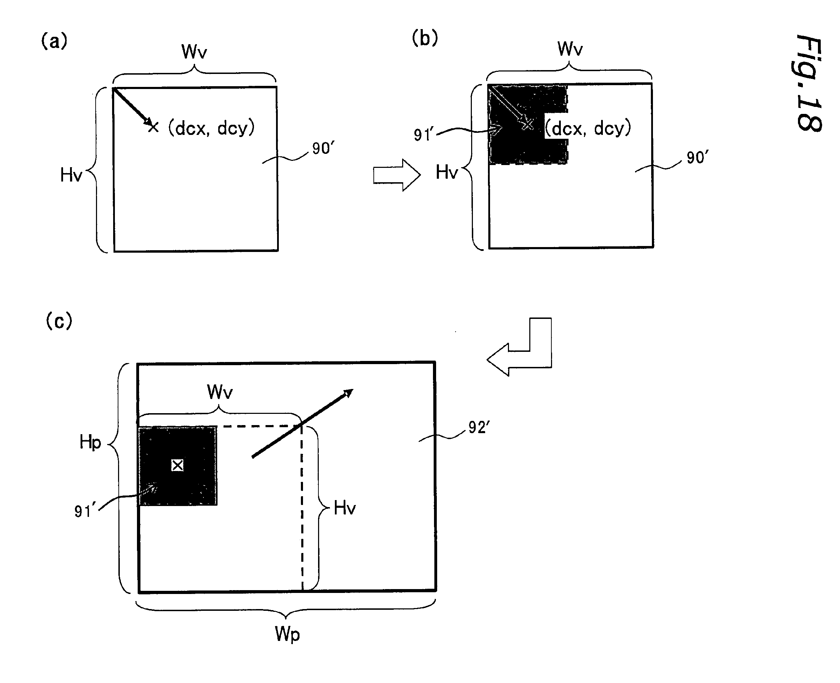

Further, another example is described with reference to Fig. 18. Here, the priority display coordinates (dcx, dcy) are acquired for frame data 90' having the image size (Wv, Hv) (see Fig. 18(a)). The scaling portion 89 takes, as a priority display area 91', an area centering on the priority display coordinates (dcx, dcy) that is maximal in the frame data 90' (see Fig. 18(b)). In this case, the priority display area 91' is an upper left portion of the frame data 90'. In this example, the aspect ratio of the image size (Wv, Hv) is different from that of the display area size (Wp, Hp) (i.e., Wv is shorter than Hv, in contrast to the above-described example), and, moreover, the priority display area 91' is located at the upper left of the frame data 90'. Therefore, if the slice mode is used in this embodiment and scaling is performed in the slice mode in the x direction, a portion of the priority display area 91' will be omitted when displayed.

Accordingly, the fill mode is selected as the scaling method, and as a result, the scaling portion 89 scales the priority display area 91' in the fill mode to the same size as the display area size (Wp, Hp) (see Fig. 18(c)). Thus, the scaling portion 89 estimates the priority display area from the priority display coordinates (dcx, dcy), and selects an appropriate scaling method such that the priority display area 91' is displayed in a video display area having the display area size (Wp, Hp), so that the priority display area 91' can be reliably displayed.

In addition, when 'stdc' is not present, scaling is performed, taking as a reference, a state in which the upper left of the image is made to coincide with the upper left of the display area. Here, a state in which the lower left, the upper right, the lower right or the center of the image is made to coincide with the lower left, the upper right, the lower right or the center of the display area may be taken as the reference for scaling, or the reference state may be set by the user.

### (3) Media data display method in media data display device 85

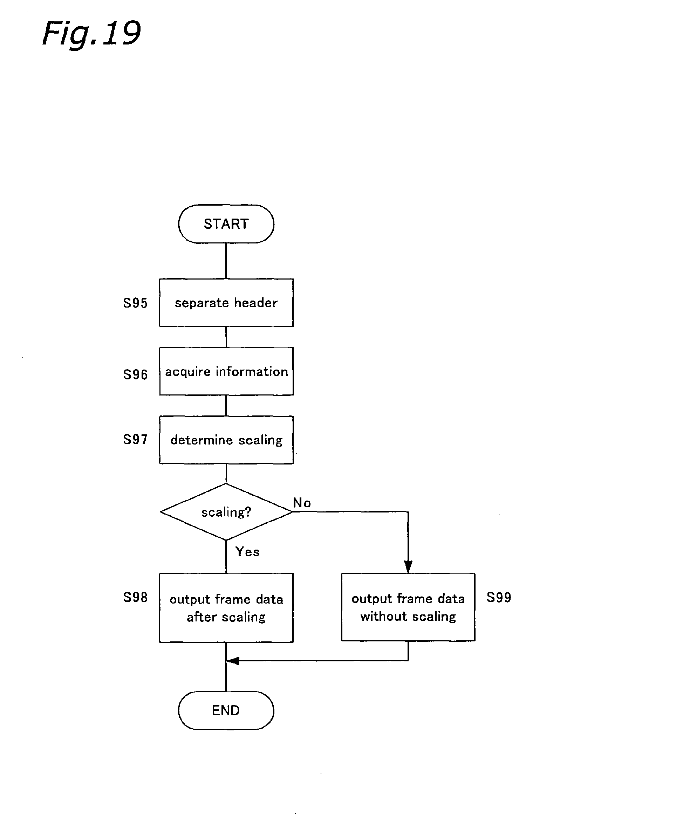

A media data display method in the media data display device 85 is described with reference to Fig. 19.

The header separating portion 88 separates 'tkhd', 'stsd', 'stdc' and 'stsl' from the MP4 file (step S95). The scaling portion 89 acquires the display area size (Wp, Hp) stored in 'tkhd' and the image size (Wv, Hv) stored in 'stsd' from the basic display information acquisition portion 17, and acquires the priority display coordinates (dcx, dcy) stored in 'stdc' and the scaling method stored in 'stsl' from the expanded display information acquisition portion 37 (step S96). If the expanded display information acquisition portion 86 acquires 'stsl', the scaling determining portion 87 determines to perform scaling (step S97). If it is determined to perform scaling, the scaling portion 89 outputs the priority display area of the frame data stored in the frame memory 16 after scaling it to the display area size (Wp, Hp) (step S98). If it is determined not to perform scaling, the scaling portion 89 outputs the priority display area of the frame data stored in the frame memory 16 without scaling it (step S99).

Here, even when 'stsl' is present, scaling is not performed if the hidden mode is set as the scaling mode. In addition, when 'stsl is present in the MP4 file, but the terminal cannot interpret 'stsl', scaling may be performed in the fill mode to the display area size (Wp, Hp) indicated by 'tkhd'.

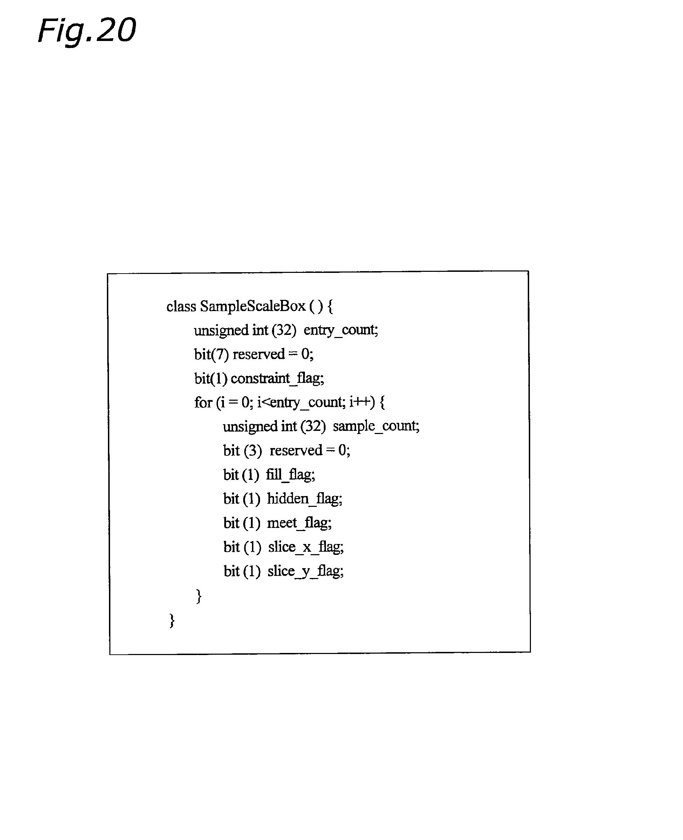

In the foregoing, scaling is always performed before display, in accordance with the scaling operation indicated by 'stsl' when 'stsl' is present; however, it is also possible to additionally provide information for allowing the terminal side to select whether to follow the scaling operation of 'stsl'. Fig. 20 shows an example of the syntax for setting this information in 'stsl'. Here, if [constraint_flag] is set, it indicates that scaling is always performed in accordance with the scaling operation indicated by 'stsl'. If it is not set, it indicates that whether to perform scaling can be selected at the terminal. Accordingly, if [constraint_flag] is not set, whether to perform scaling may be determined based on the remaining capacity of the battery of the terminal, or information such as the content of the user's settings.

Further, by always performing scaling in the fill mode to the display area size (Wp, Hp) when 'stsl' is present, 'stdc' can be used only when 'stsl' is present. Therefore, the MP4 file acquired by the media data display device 85 may be allowed to store 'stdc' only when 'stsl' is present.

By performing this operation, it is possible to provide an expanded function relating to the display operation for a terminal capable of interpreting 'stsl' and 'stdc', while maintaining backward compatibility with conventional display operations performed when reproducing MP4 files.

### (4) Effect of media data display device 85

With the media data display device 85, it is possible to determine whether to perform scaling based on 'stsl'. Here, 'stsl' is a box indicating the scaling method. Therefore, when 'stsl' is present, it is conceivable that the provider of the MP4 file intends the frame data to be scaled before being displayed. That is, it is possible to realize a display that reflects the intention of the provider of the MP4 file.

In the case of the conventional media data display device 10, scaling needs to be performed for several to several tens of times per second at the time of displaying video, so that the load on the CPU and the electric power consumption are high. On the other hand, in the case of the media data display device 85, scaling does not necessarily need to be performed, making it possible to reduce the throughput and the electric power consumption. This is effective especially in cases where the media data display device 85 is provided in mobile phones and the like.

Additionally, the MP4 files that are taken as a basis of the present invention include 'stsl', which has been newly defined. Therefore, when an MP4 file including 'stsl' is acquired in the conventional media data display device 10, which is not enabled for 'stsl', 'stsl' is not recognized and thus is skipped. That is, a data structure for an MP4 file is provided that does not affect the display of the conventional media data display device 10 and realizes a novel function for a device capable of recognizing 'stsl'.

### (5) Modifications of media data display device 85

### (5-1) Modifications of media data display device 85

### (5-1-1)

The media data display device 85 may not include the scaling determining portion 87, and may always perform scaling before display. Here, the scaling portion always performs an operation similar to that performed by the scaling portion 89 when it is determined that scaling is performed before display.

Additionally, when the expanded display information acquisition portion 86 does not acquire 'stsl' and 'stdc', the scaling portion 89 may perform scaling in the meet mode or the slice mode, instead of the fill mode.

Furthermore, when scaling is performed in the fill mode, the meet mode or the slice mode, scaling may be performed only by an integral scaling factor such as 1/2, 1/4, 2 and 3.

For example, this allows each two adjacent pixels to be sequentially processed when scaling is performed by a factor of 1/2, and thus simplifies processing during scaling, thereby saving electric power consumption.

### (5-1-2)

The media data display device 85 may not include the expanded display information acquisition portion 86 and the scaling determining portion 87, and may determine whether to perform scaling and the scaling method in accordance with a user instruction.

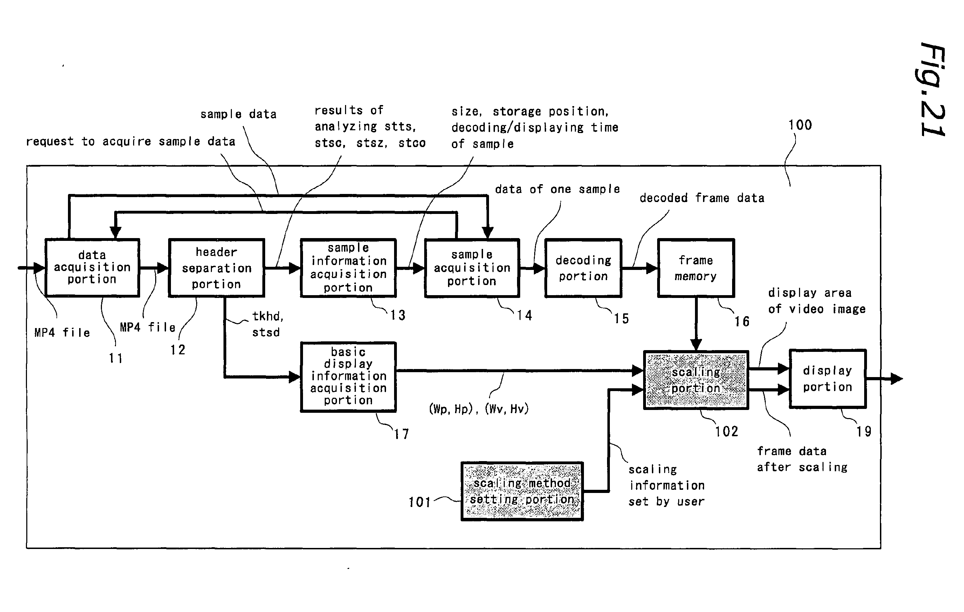

Fig. 21 is a block diagram illustrating the configuration of a media data display device 100 according to a modification of the third embodiment. Those parts of the media data display device 100 shown in Fig. 21 that are different from the media data display device 85 shown in Fig. 14 are described. It should be noted that parts that perform similar operations as in the media data display device 85 are given the same reference numerals, and their description has been omitted.

The media data display device 100 is different from the media data display device 85 in that it does not include the expanded display information acquisition portion 86 and the scaling determining portion 87 that are included in the media data display device 85, and that it includes a scaling method setting portion 101. The scaling method setting portion 101 allows the user to set the scaling method (e.g., the fill mode, the meet mode or the slice mode). In addition, a scaling portion 102 scales frame data having the image size (Wv, Hv) that is stored in the frame memory 16 to a video display area having the display area size (Wp, Hp) by the scaling method set by the scaling method setting portion 101.

This makes it possible to reflect the user's intention on whether to perform scaling and on the scaling method.

### (5-2) Modifications of scaling determining portion 87

### (5-2-1)

The scaling determining portion 87 may determine whether to perform scaling in accordance with the remaining capacity of the battery with which the media data display device is provided, instead of, or in addition to determining whether to perform scaling based on the fact that the expanded display information acquisition portion 86 has acquired 'stsl'. That is, the scaling determining portion 87 acquires the remaining capacity of the battery from a battery management portion (not shown) to determine whether to perform scaling.

By prioritizing the determination of whether to perform scaling based on the remaining battery capacity when the remaining capacity of the battery is low, it is possible to reduce energy consumed by performing scaling, thus extending the serviceable time of the media data display device 85.

When the remaining capacity of the battery is high, on the other hand, it is also possible to perform scaling before display, regardless of whether 'stsl' has been acquired or not.

### (5-2-2)

The scaling determining portion 87 may switch whether to perform scaling or not in accordance with the user's settings, instead of, or in addition to determining whether to perform scaling based on the fact that the expanded display information acquisition portion 86 has acquired 'stsl'. That is, the scaling determining portion 87 switches whether to perform scaling or not in accordance with a setting from a scaling setting portion (not shown).

Specifically, the user may specify whether to perform scaling with "scaling" menu on a menu screen of a portable terminal or the like that incorporates the media data display device, or may determine not to perform scaling if a power saving mode is selected in "power saving setting" menu.

Additionally, it is also possible to always prioritize the user's setting, regardless of whether 'stsl' has been acquired or not.

### (5-2-3)

The scaling determining portion 87 may determine whether to perform scaling based on information other than 'stsl' that is acquired from the MP4 file.

### <1>

The scaling determining portion 87 may not perform scaling when the expanded display information acquisition portion 86 acquires 'stdc', but not 'stsl'.

### <2>

The scaling determining portion 87 may determine whether to perform scaling based on 'ftyp' acquired by the basic display information acquisition portion 17. For example, it may determine whether to perform scaling based on whether an identifier (e.g., [major_brand] or [compatible_brand]) indicating a particular specification is included or not.

### <3>

The scaling determining portion 87 may determine whether to perform scaling based on 'mvhd' or 'tkhd' acquired by the basic display information acquisition portion 17.

For example, it may determine the frame rate of the frame data based on the duration of 'tkhd' and the total number of samples in a track acquired from a box such as 'stsz' included in 'stbl', or the sample duration indicated in 'stts', and may perform scaling when the frame rate is equal to or lower than a set value (e.g., a frame rate of 0.5 frame/s versus the set value of 1 frame/s).

Alternatively, it may perform scaling when the time required for encoding and scaling one frame is shorter than the time the media data display device 85 can allocate for decoding and displaying one frame (e.g., 1/15 second, in the case of 15 frame/s).

In this case, it is possible to switch whether to perform scaling or not in accordance with the throughput of the media data display device 85.

### (6) Other considerations

### (6-1)

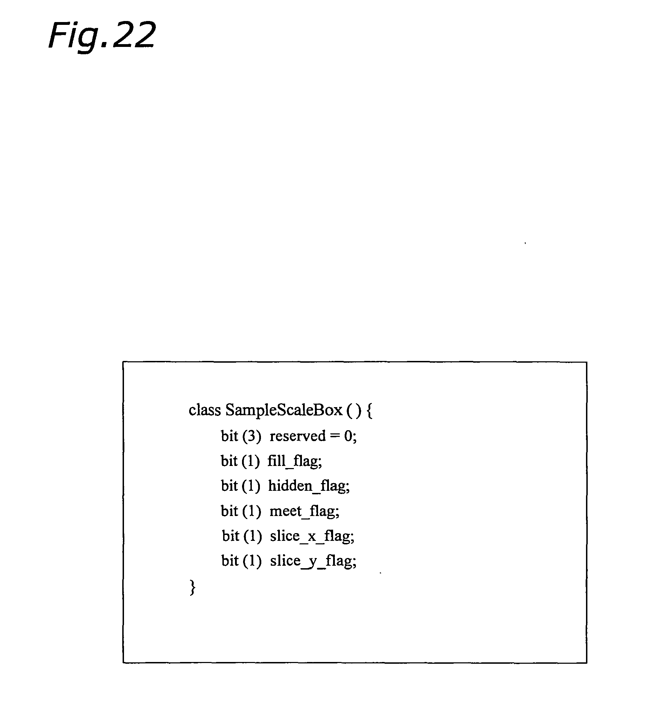

It has been described that, in an MP4 file, 'stsl' is stored in 'stbl' and specifies the scaling method for each sample. Here, 'stsl' may be stored in 'trak' and may specify the same scaling method for each track. Fig. 22 shows an example of the syntax for indicating the scaling method for each track. At this time, it is preferable that 'stsl' is placed directly below 'trak'. Alternatively, the scaling method may be specified for each chunk, which is a group of a plurality of samples.

### (6-2)

'stdc' and 'stsl' described in the above embodiment may be information items included in the same box. For example, in an MP4 file acquired by the media data display device 85, the priority area information stored in 'stdc' may be included in 'stsl', and vice versa.

### (6-3)

In the syntaxes shown in Fig. 15 and Fig. 20, the scaling method is specified as flag information.

Here, the scaling method may be specified, for example, with the value of [scale_method], which is represented by 8 bits. More specifically, one of values of [1] to [5] is given to each of the fill mode, the hidden mode, the meet mode, the slice mode on the X-axis (in the horizontal direction of the screen), and the slice mode on the Y-axis (in the horizontal direction of the screen).

Any information for specifying the scaling method may be used, without limitation to the above.

Furthermore, in this case, the rest of the values of [scale_method], for example, the values of 128 to 255 may be used as a user specified area in the following manner.

### (6-3-1)

The user specified area may be used for indicating information on the scaling method or the priority area that is other than the information on the scaling method or the priority area described in the above embodiment.

### <1>

For example, it may be used for indicating a standard specification such as 3GPP (3rd Generation Partnership Project), or information on the scaling method or the priority area prescribed by the operational standard of the service provider. In this case, the standard specification or a unique number assigned to the operational standard is stored in the user specified area.

### <2>

It may also be used for indicating, for example, the priority during displaying an image of a track. Specifically, the priority is indicated with specific bits (e.g., the first 3 bits) of [scale_method]. Accordingly, for example, when the priority of a text track is 2 and the priority of a video track is 1, it is possible, for example, to display the text with priority through overlaying or the like.

### <3>

Furthermore, for example, when an MP4 file is transmitted as an auxiliary data for a TV program or for the main content such as a download/streaming content, the user specified area may also be used for indicating that the MP4 file is an auxiliary data. Specifically, it is possible to change the display method for the auxiliary data and the main content, for example, by displaying the auxiliary data by a predetermined method.

### (6-3-2)

The user specified area may also be used for indicating the following information.

### <1>

For example, it may be used for indicating information related to scrolling. Specifically, "information related to scrolling" refers to information that includes information indicating a default (unscrolled) display area, or flag information indicating whether to enable a scrolling function when the terminal has a scrolling function and is not capable of displaying the entire image area at once. Accordingly, through scrolling, it is possible, for example, to prevent an image to be displayed from being scaled and displayed inappropriately. In other words, it is possible to appropriately display an image to be displayed through scrolling.

### <2>

The user specified area may also be used for indicating, for example, a plurality of display-related information items associated with the capability of the terminal that displays multi-media data. Here, "display-related information" refers to information related to display of samples, including, for example, information stored in 'stbl'. More specifically, "display-related information" refers to information included in Visual Sample Entry, the above-described information stored in 'stsl', or information included in 'stdc'.

The user specified area may indicate, for example, a plurality of display-related information items, using a plurality of 'stsl's associated with the capability of the terminal, or may indicate a plurality of display-related information items associated with the capability of the terminal by including a plurality of entries in 'stsl'. In the case of using a plurality of 'stsl's, a plurality of Visual Sample Entries in each of which one 'stsl' is stored may be provided.

The display-related information and the capability of the terminal are associated, for example, by attaching an identifier for the terminal's capability, such as High, Medium or Low, to each display-related information item. In the terminal that performs display, display is performed based on information corresponding to High when the capability is high, and information corresponding to Low when the capability is low.

Accordingly, it is possible to acquire display-related information corresponding to the capability of the terminal, thus making it possible, for example, to perform display by an optimum display method in accordance with the capability of the receiving terminal that displays multi-media data.

Further, when the same MP4 file is simultaneously viewed at a plurality of terminals, display is performed based on the display-related information corresponding to the terminal with the lowest capability. In this case, it is possible to perform an identical display in all of a plurality of the terminals having different capabilities. Additionally, the capability of each of the terminals is exchanged by a predetermined communication among the terminals.

### <3>

The user specified area may also be used for indicating information that specifies, for example, the positional relationship, the layer and the scaling method at the time of simultaneously displaying the main content and the auxiliary data (see <3> of (6-3-1) above).

### Fourth embodiment

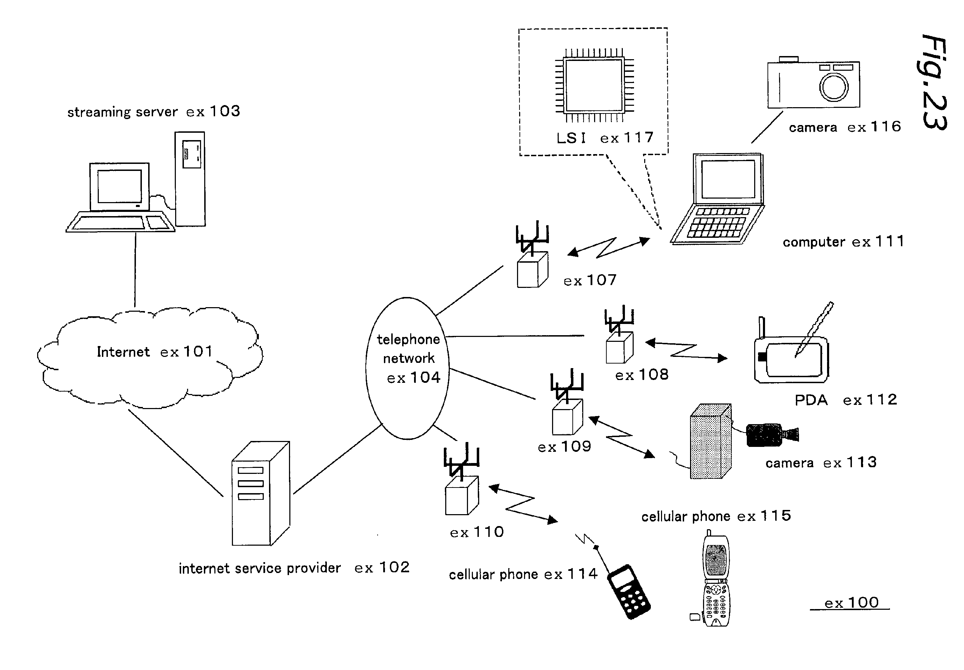

An example of the application of the media data display device, the media data display method and the media data display program, as well as a system using the same according to a fourth example of the present invention are described with reference to Figs. 23 to 26.

Fig. 23 is a block diagram showing the overall configuration of a content serving system ex 100 that realizes a content distribution service. The provision area of the communications service is divided into desired sizes, and base stations ex 107 to ex 110, which are fixed radio stations, are provided in the respective cells.

The content serving system ex 100 is connected, for example, to the Internet ex 101 via an internet service provider ex 102 and a telephone network ex 104, and to various devices such as a computer ex 111, a PDA (personal digital assistant) ex 112, a camera ex 113, a mobile phone ex 114 and a camera-equipped mobile phone ex 115 via the base stations ex 107 to ex 110.

The content serving system ex 100, however, is not limited to a combination as shown in Fig. 23, and it is also possible to connect a portion of the combination. Alternatively, each of the devices may be directly connected to the telephone network ex 104, without using the base stations ex 107 to ex 110, which are fixed radio stations.

The camera ex 113 is a device capable of capturing moving images, such as a digital video camera. The mobile phone is, for example, a mobile phone of the PDC (Personal Digital Communications) format, the CDMA (Code Division Multiple Access) format, the W-CDMA (Wideband-Code Division Multiple Access) format or the GSM (Global System for Mobile Communications) format, or a PHS (Personal Handyphone System), and any of these may be used.

In addition, a streaming server ex 103 is connected to the camera ex 113 via the base station ex 109 and the telephone network ex 104, stores encoded data captured with the camera ex 113 as an MP4 file, and transmits that file. Alternatively, it is also possible to encode and multiplex moving images captured with the camera-equipped mobile phone, and to transmit the multiplexed data to the server ex 103. Additionally, the captured data may be encoded with the camera ex 113 or with a server or the like that performs data transmission. The moving image data captured with a camera ex 116 may be transmitted to the streaming server ex 103 via the computer ex 111. The camera ex 116 is a device capable of capturing still images and moving images, such as a digital camera. In this case, the moving image data may be encoded either with the camera ex 116 or the computer ex 111. The encoding process is executed in an LSI ex 117 included in the computer ex 111 or the camera ex 116. In addition, image encoding-decoding software may be installed in a storage medium (e.g., a CD-ROM, a flexible disk or a hard disk) that is a recording medium readable on the computer ex 111 and the like. Further, the moving image data may be transmitted with the camera-equipped mobile phone ex 115. This moving image data is data encoded in the LSI included in the mobile phone ex 115. Thus, in the case of applying the present invention to a distribution system, an MP4 file that has been stored in advance is distributed from an HTTP streaming server. That is, an MP4 file itself is transmitted, instead of packetizing and distributing encoded data.

Further, the streaming server ex 103 is connected to the camera ex 113 via the base station ex 109 and the telephone network ex 104, making it possible to realize, for example, live distribution based on encoded data transmitted by the user using the camera ex 113. Additionally, in order to perform live distribution as described above, it is necessary to create an MP4 file in real time, so that a fragmented MP4 file is used. By using a fragmented MP4, it is possible to perform low-delay distribution closer to live distribution, using HTTP/TCP.

In the case of the content serving system ex 100, the user encodes a content (e.g., a video clip of a music live performance) being captured with the camera ex 113, the camera ex 116 and the like and transmits it to the streaming server ex 103, while the streaming server ex 103 performs streaming distribution of the above-described content data to a requesting client. Examples of the client include the computer ex 111, the PDA ex 112, the camera ex 113 and the mobile phone ex 114, which are capable of decoding the encoded data. By doing so, the content serving system ex 100 allows the encoded data to be received and reproduced on the client, and furthermore, it allows the encoded data to be received, decoded and reproduced in real time on the client, thus making it possible to realize personal broadcasting. Additionally, at the time of reproducing the content, it is also possible to use a media data display program that realizes, with a computer, the media data display device and the media data display method of the above-described embodiment. For example, the computer ex 111, the PDA ex 112, the camera ex 113 and the mobile phone ex 114 may be provided with a media data display program that realizes the media data display method described in the above embodiment.

As an example, the mobile phone is described.

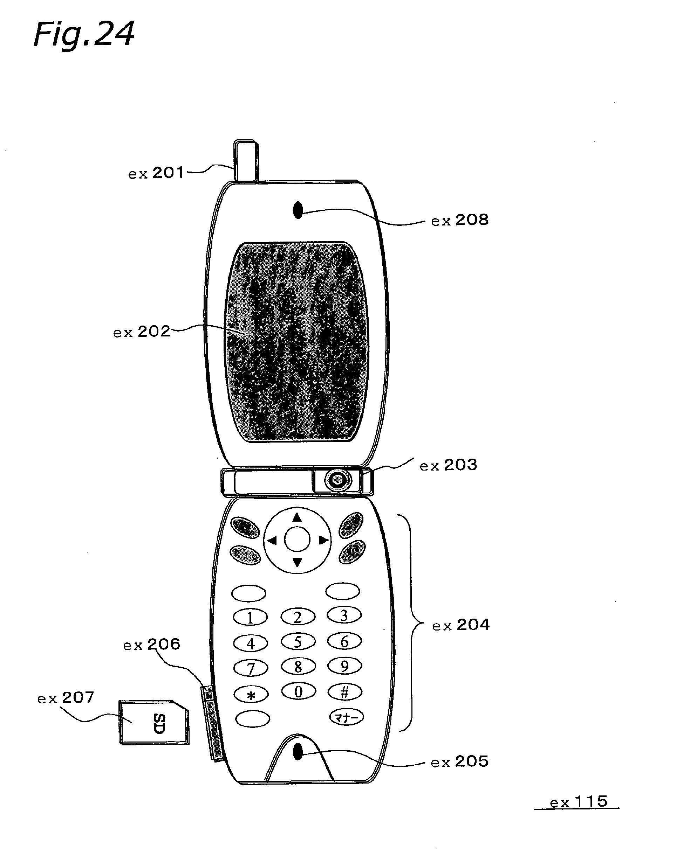

Fig. 24 is a diagram showing the mobile phone ex 115 using the media data display device of the above-described embodiment. The mobile phone ex 115 includes: an antenna ex 201 for transmitting and receiving radio waves to and from the base station ex 110; a camera portion ex 203, such as a CCD camera, capable of capturing video and still images; a display portion ex 202, such as a liquid crystal display, that displays data obtained by decoding video captured with the camera portion ex 203, video received with the antenna ex 201 and the like; a body portion constituted by a group of operation keys ex 204; an audio output portion ex 208, such as a speaker, for outputting audio; an audio input portion ex 205, such as a microphone, for inputting audio; a recording medium ex 207 for storing encoded data or decoded data such as data of captured moving images or still images, data of received e-mails and data of moving images or data of still images; and a slot portion ex 206 for allowing the recording medium ex 207 to be placed in the mobile phone ex 115. The recording medium ex 207 stores, in a plastic case such as an SD card, a flash memory device that is one kind of EEPROM (electrically erasable and programmable read only memory), which is an electrically rewritable and erasable nonvolatile memory.

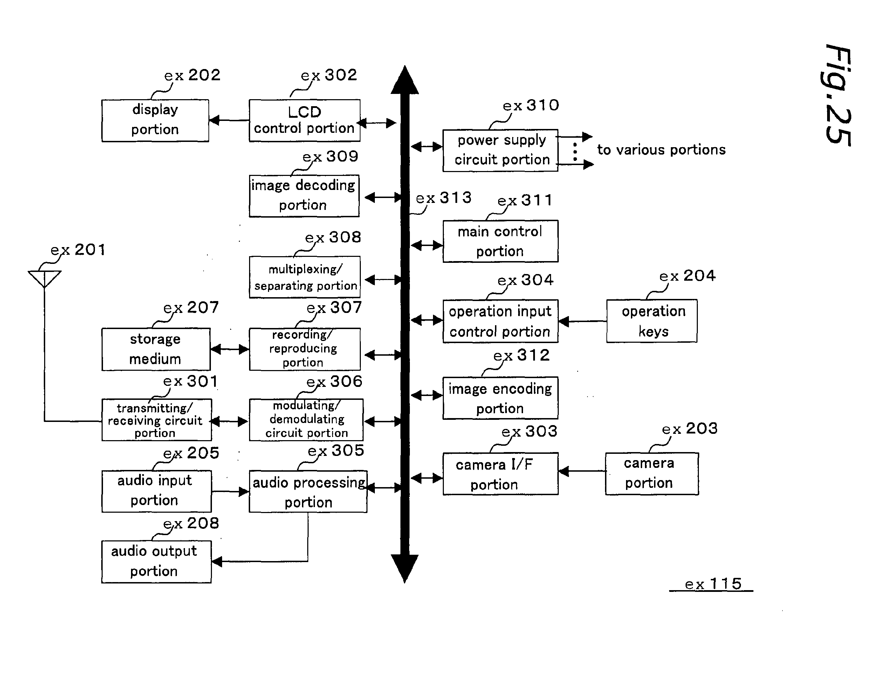

The mobile phone ex 115 is further described with reference to Fig. 25. In the mobile phone ex 115, a power supply circuit portion ex 310, an operation input control portion ex 304, an image encoding portion ex 312, a camera interface portion ex 303, an LCD (liquid crystal display) control portion ex 302, an image decoding portion ex 309, a multiplexing/demultiplexing portion ex 308, a recording/reproducing portion ex 307, a modulating/demodulating circuit portion ex 306 and an audio processing portion ex 305 are mutually connected via a synchronous bus ex 313 to a main control portion ex 311 that performs centralized control of various portions of the body portion provided with the display portion ex 202 and the operation keys ex 204.

If an END/Power key is turned on by a user's operation, the power supply circuit portion ex 310 drives the camera-equipped digital mobile phone ex 115 into an operable state by supplying power to various portions from a battery pack.

In accordance with the control from the main control portion ex 311 made up of a CPU, a ROM, a RAM and the like, the mobile phone ex 115 converts an audio signal collected with the audio input portion ex 205 in a voice call mode into digital audio data with the audio processing portion ex 305, and subjects this to spread-spectrum processing with the modulating/demodulating circuit portion ex 306 and to digital-to-analog conversion and frequency conversion with a transmitting/receiving circuit portion ex 301, and then transmits it via the antenna ex 201. Additionally, the mobile phone ex 115 amplifies a received signal received with the antenna ex 201 in a voice call mode, and subjects this to frequency conversion and analog-to-digital conversion and to spread-spectrum processing with the modulating/demodulating circuit portion ex 306, converts it to an analog audio signal with the audio processing portion ex 305, and then outputs it via the audio output portion ex 208.

Furthermore, in the case of sending an e-mail in a data transmission mode, text data of the e-mail that has been input by operating the operation keys ex 204 of the body portion is sent out to the main control portion ex 311 via the operation input control portion ex 304. The main control portion ex 311 subjects the text data to spread-spectrum processing with the modulating/demodulating circuit portion ex 306 and to digital-to-analog conversion and frequency conversion with the transmitting/receiving circuit portion ex 301, and then transmits it to the base station ex 110 via the antenna ex 201.

In the case of transmitting image data in a data transmission mode, image data captured with the camera portion ex 203 is supplied to the image encoding portion ex 312 via the camera interface portion ex 303. On the other hand, in the case of not transmitting image data, image data captured with the camera portion ex 203 can also be directly displayed in the display portion ex 202 via the camera interface portion ex 303 and the LCD control portion ex 302.

The image encoding portion ex 312 converts image data supplied from the camera portion ex 203 into encoded image data by compressing and encoding it, and sends this to the multiplexing/demultiplexing portion ex 308. At the same time, the mobile phone ex 115 sends, in the form of digital audio data, audio collected with the audio input portion ex 205 during capturing images with the camera portion ex 203 to the multiplexing/demultiplexing portion ex 308 via the audio processing portion ex 305.

The multiplexing/demultiplexing portion ex 308 multiplexes the encoded image data supplied from the image encoding portion ex 312 and the audio data supplied from the audio processing portion ex 305 by a predetermined method, and subjects the resulting multiplexed data to spread-spectrum processing with the modulating/demodulating circuit portion ex 306 and to digital-to-analog conversion and frequency conversion with the transmitting/receiving circuit portion ex 301, and then transmits it via the antenna ex 201.

In the case of receiving data of a moving image file linked to a web site or the like in a data transmission mode, a received signal received from the base station ex 110 via the antenna ex 201 is subjected to spread-spectrum processing with the modulating/demodulating circuit portion ex 306, and the resulting multiplexed data is sent to the multiplexing/demultiplexing portion ex 308.

In addition, in order to decode the multiplexed data received via the antenna ex 201, the multiplexing/demultiplexing portion ex 308 separates the multiplexed data so as to divide it into an encoded bit stream of image data and an encoded bit stream of audio data, and supplies the encoded image data to the image decoding portion ex 309 via the synchronous bus ex 313, and the audio data to the audio processing portion ex 305.

Next, the image decoding portion ex 309 generates reproduction moving image data by decoding the encoded bit stream of image data, and supplies this to the display portion ex 202 via the LCD control portion ex 302, thereby displaying the moving image data contained in a moving image file linked to a web site, for example.

In addition, the image decoding portion ex 309 serves the function of the media data display device of the above-described embodiment.

At the same time, the audio processing portion ex 305 converts the audio data into an analog audio signal, and then supplies this to the audio output portion ex 208, thereby displaying the audio data contained in a moving image file linked to a web site, for example.

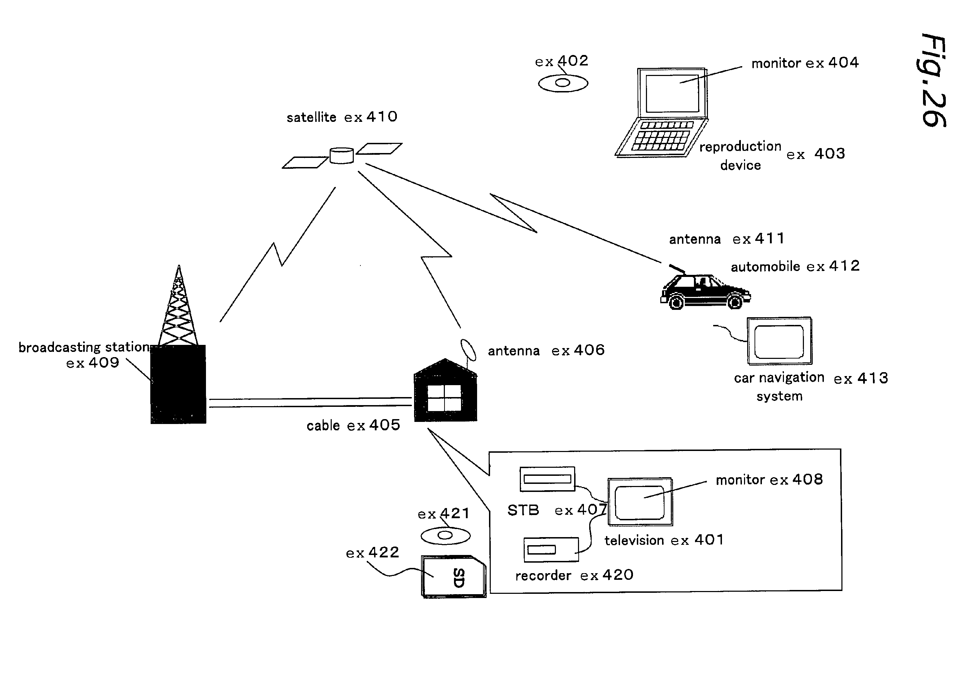

Furthermore, the mobile phone ex 115 may also include a media data display program that realizes the media data display method of the above-described embodiment. As shown in Fig. 26, the media data display device and the media data display method of the above-described embodiment, as well as the media data display program that realizes the media data display method, can also be installed in a reproduction device ex 403 that reads and decodes multiplexed data of an encoded bit stream recorded in a storage medium ex 402 such as a CD or a DVD, which is a recording medium. In this case, the reproduced video signal is displayed on a monitor ex 404. Alternatively, it is also possible to install the media data display device of the above-described embodiment in a set-top box ex 407 connected to a cable television cable ex 405 or to a satellite/terrestrial broadcasting antenna ex 406, and to reproduce this on a television monitor ex 408. At this time, the media data display device may be incorporated in a television, instead of in the set-top box. It is also possible to receive a signal from a broadcasting satellite ex 410 or the base station ex 107 with an automobile ex 412 having an antenna ex 411, and to reproduce moving images on a display device, such as a car navigation system ex 413 of the automobile ex 412.

Furthermore, it is also possible to encode and multiplex an image signal, and to record it in a recording medium. Specific examples include a DVD recorder that records an image signal in a DVD disk ex 421 and a recorder ex 420, such as a disk recorder, that records an image signal in a hard disk. Additionally, it is also possible to record an image signal in an SD card ex 422. When the recorder ex 420 is provided with the media data display device of the above-described embodiment, it is possible to reproduce the image signal recorded in the DVD disk ex 421 or the SD card ex 422, and to display it on the monitor ex 408.

The car navigation system ex 413 may have, for example, a configuration corresponding to the configuration shown in Fig. 25 from which the camera portion ex 203, the camera interface portion ex 303 and the image encoding portion ex 312 have been omitted, and the same can apply to the computer ex 111, a television (receiver) ex 401 and the like.

Further, the terminal such as the above-described mobile phone ex 114 can be one of three different types of terminals, namely, a transmitting/receiving terminal having both an encoder and a decoder, a receiving terminal having only an encoder, and a receiving terminal having only a decoder.

Thus, it is possible to use the media data display device and the media data display method of the above-described embodiment, and the media data display program that realizes the media data display method in any of the above-described devices and systems, and they can achieve the effect described in the above embodiment.

### Other Considerations

Various modifications and combinations can be made to the contents described above in the first to fourth embodiments, as long as they do not depart from the spirit of the embodiments.

### (1)

The display area converting portion 21 and the terminal display screen size acquisition portion 22 described in the first embodiment with reference to Fig. 1 may also be provided in the media data display device 35 described in the second embodiment with reference to Fig. 4.

In this case, the display position determining portion 38 displays a priority display area in a video display area set by the display area converting portion 21.

### (2)

The display area converting portion 21 and the terminal display screen size acquisition portion 22 described in the first embodiment with reference to Fig. 1 may also be provided in the media data display device 85 or the media data display device 100 described in the third embodiment with reference to Fig. 14 or Fig. 21. In this case, the scaling portion 89 or the scaling portion 102 scales frame data with respect to a video display area set by the display area converting portion 21. Therefore, both the function of setting the moving image display area and the scaling function can be realized. Then, when the scaling portion does not perform scaling based on a determination result from the scaling determining means, an effect similar to that of the first embodiment can be achieved.

Additionally, the display position determining portion 38 described in the second embodiment with reference to Fig. 4 may be further provided, and it is possible to let it determine the display position for display when scaling is not performed.

### (3)

An MP4 file may occasionally be used for multiplexing and recording video, audio or text data. For example, video and audio captured with the camera of a mobile phone and the like are recoded as an MP4 file.

At the time of recording an MP4 file, 'stdc' and 'stsl' described in the above embodiments can be set in advance by the creator of the MP4 file. Additionally, the display area size (Wp, Hp) of a video display area can be set during recording video. Here, when the image size (Wv, Hv) of video to be recorded changes, the maximum value of the image size (Wv, Hv) can be set as the display area size (Wp, Hp).

This makes it possible to set a sufficient display area size (Wp, Hp) in the media data display device at the time of displaying video.

### (4)

The pan-scan of MPEG-2 video may be used in combination with the display of the priority display area using 'stdc'.

In the pan-scan of MPEG-2 video, an area to be displayed is specified by setting the difference value between the center of the video image and the center of the display.

Here, the pan-scan is used for cutting out and displaying only a specified area of a decoded image frame. That is, areas of the video that are other than the specified area are not displayed even if there is a room in the video display area.

On the other hand, 'stdc' is aimed at performing a more effective display in a device having a small display screen and no scaling function, by indicating the center of the area to be displayed with priority. That is, the area to be displayed is not limited, and video can be displayed in the entire video display area if there is a room in the video display area.

Therefore, when the pan-scan is combined with the display of the priority display area using 'stdc' and when a specified area cut out by the pan-scan has a size larger than the display screen, it is possible to determine which portion of the cut out area has priority, and to display the specified area with that portion as the center.

### (5)

Although the MP4 file that does not use any fragment is described in the above-described embodiments, a similar display operation can be performed for a fragmented MP4 file. At the time of setting display information for each sample in a fragmented MP4 file, the display information is set in each fragment.

### (6)

Although a priority area or scaling information is used as display-related information in the above-described embodiments, there is no limitation on using other display-related information. In addition, other display-related information such as setting of display effect may be used in combination with the above-described display information.

### (7)

In the above-described embodiments, it is stated that the priority area, the scaling method and the like may be specified for each chunk.

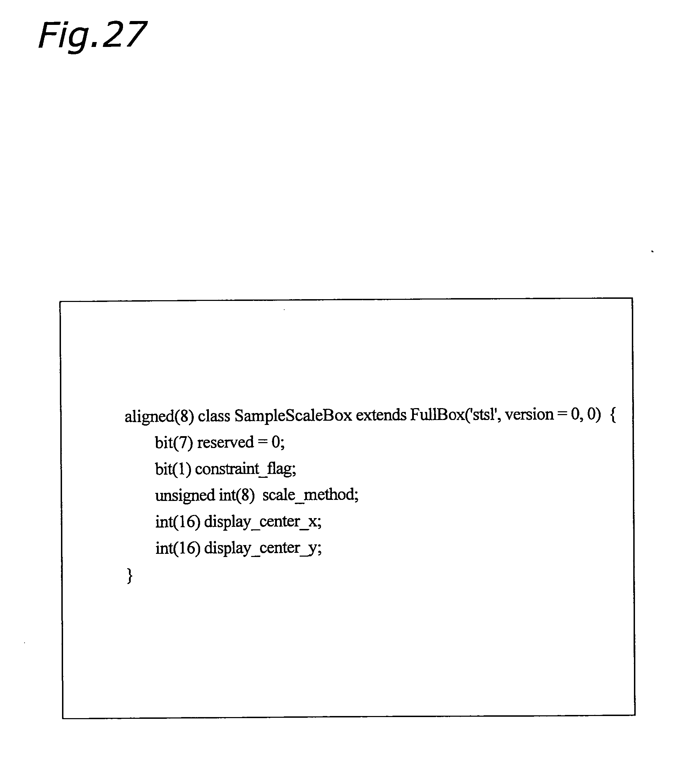

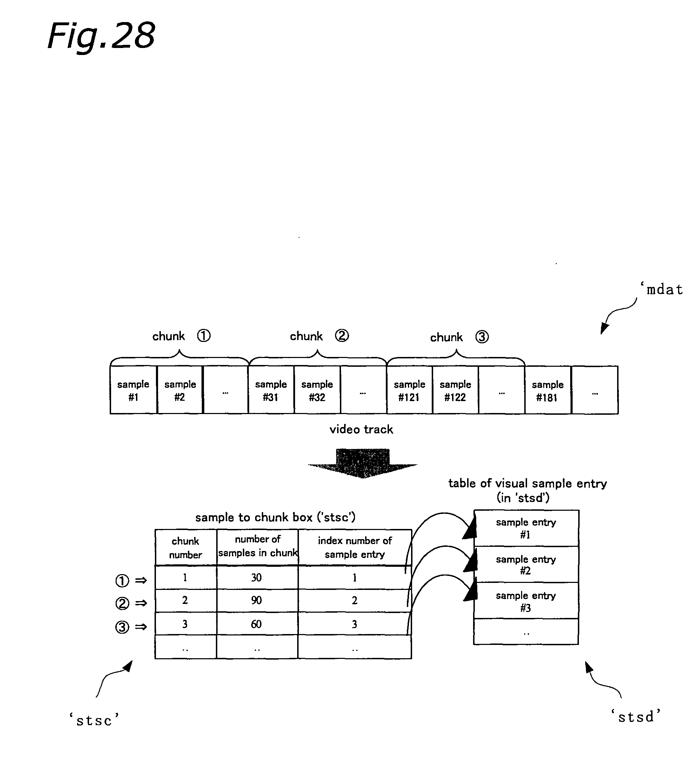

A case where these are specified for each chunk is described in detail with reference to Figs. 27 and 28.

Samples stored in 'mdat' are grouped into units called chunks, each containing one or more samples, and information is displayed in units of chunks by associating the chunks with sample entries. Here, "sample entry" refers to an entry in 'stsd', and stores, for example, initialization information used during decoding a sample. In particular, the sample entry for a video track is called Visual Sample Entry. In addition, the association of the chunks and the sample entries is described in 'stsc'.

The information items (e.g., 'stdc' and 'stsl') described in the above embodiment that specify the priority area, the scaling method and the like may be stored in Visual Sample Entry in 'stsd', instead of directly below 'stbl'. Accordingly, it is possible to switch 'the display-related information such as stdc' and 'stsl' for each chunk by referencing 'stsc' for each chunk.

Here, a syntax of 'stsl' stored in Visual Sample Entry of 'stsd' is shown in Fig. 27. 'stsl' shown in Fig. 27 has a structure similar to that of the box described with reference to Fig. 29(b), and is characterized in that the information items that specify the priority area, the scaling method and the like are included in the same box. In the following, the content of the syntax is further described.

[constraint_flag] is information for indicating whether to perform display in accordance with the scaling method included in 'stsl', and is the same as that described with reference to Fig. 20 in the above-described embodiment. For example, if the flag is ON (e.g., if the bit has a value of [1]), scaling is performed in the method indicated in [scale_method], which will be described later. On the other hand, if the flag is OFF (e.g., if the bit has a value of [0]), the scaling operation can be selected at the terminal side, and display may be performed without performing scaling. Further, even if display is performed after scaling, it is not always necessary to follow the method indicated in [scale_method].

[scale_method] is information for indicating the scaling method, and the scaling method is assigned by its value. An example of this assignment is shown below. For example, value [1] specifies the 'fill' mode. Value [2] specifies the 'hidden' mode. Value [3] specifies the 'meet' mode. Value [4] specifies the 'slice_x' mode. Value [5] specifies the 'slice_y' mode.

Here, an 8 bit area is assigned to [scale_method]. This is similar to [scale_method] described in the above embodiment, for example, in that values [128 to 255] can be used as a user specified area.

[display_center_x] and [display_center_y] are information items that are the same as those described in the above embodiment, and used for specifying the priority area. Each information item stores value [0] as a default value.

In Fig. 28, the 1st to 30th samples, the 31st to 120th samples, the 121st to 180th samples are stored in the first, second and third chunks, respectively. Furthermore, the chunks reference the first, second and third sample entries, respectively. The sample entries store coordinates of the center of different priority areas, or different scaling methods, making it possible to switch them for each chunk before performing display.

Additionally, it was stated in the above description that 'stdc', 'stsl' and the like are stored in Visual Sample Entry in 'stsd'. Here, 'stdc', 'stsl' and the like may be placed directly below 'stbl'. In this case, information items that associate each of 'stdc', 'stsl' and the like with each of the chunks are separately stored. Furthermore, 'stdc', 'stsl' and the like may be associated with chunks, using Sample to Group Box ('sbgp') and Sample Group Description Box ('sgpd'), which are standardized in Amendment 1 of ISO Base Format (ISO/IEC 14496-12) or in AVC File Format (ISO/IEC 14496-15). At this time, a type of Visual Sample Group Entry that stores information such as 'stdc' and 'stsl is newly defined.

### Appendices

The invention described in the above embodiments can also be expressed as follows.

### Content of appendices

### Appendix 1

A media data display device for displaying, on a display screen, multimedia data comprising a plurality of media including moving images, comprising:
a moving image display position determining means for determining a moving image display position, the moving image display position being a display position of the moving images; and
a media data display means for displaying the multimedia data, the media data display means displaying the moving images at the moving image display position determined by the moving image display position determining means, without changing their image size.

### Appendix 2

The media data display device according to appendix 1,
wherein the multimedia data includes media display position information indicating a display position of a medium other than the moving images in the display screen, and
wherein the moving image display position determining means determines the moving image display position in accordance with the media display position information.

### Appendix 3

The media data display device according to appendix 1, further comprising:
a moving image display position setting means capable of setting the moving image display position,
wherein the moving image display position determining means determines the moving image display position based on a setting of the moving image position setting means.

### Appendix 4

The media data display device according to appendix 1,
wherein the multimedia data includes priority display area information indicating a priority display area, the priority display area being displayed with priority in the moving images, and
wherein the moving image display position determining means determines the moving image display position based on the priority display area information.

### Appendix 5

The media data display device according to appendix 4,
wherein the multimedia data includes moving image display area information indicating a moving image display area in which the moving images can be displayed in the display screen,
wherein the priority display area information is information indicating the center of the priority display area, and
wherein the moving image display position determining means determines the moving image display position such that the center of the moving image display area coincides with the center of the priority display area, based on the moving image display area information and the priority display area information.

### Appendix 6

The media data display device according to appendix 4 or 5,
wherein the multimedia data includes moving image display area information indicating a moving image display area in which the moving images can be displayed in the display screen, and
wherein the moving image display position determining means determines the moving image display position such that the priority display area is included and that as large an area as possible of the moving images is displayed.

### Appendix 7

A media data display device for displaying, on a display screen, multimedia data comprising a plurality of media including moving images, comprising:
a moving image display area setting means for setting, in a predetermined size, a moving image display area in which the moving images can be displayed in the display screen, when it is determined that the moving image display area has an arbitrary size based on moving image display area information obtained from the multimedia data; and
a media data display means for displaying the multimedia data, the media data display means displaying the moving images in the moving image display area having the predetermined size set by the moving image display area setting means, without changing their image size.

### Appendix 8

A media data display device for displaying, on a display screen, multimedia data comprising a plurality of media including moving images, comprising:
a moving image display area setting means for setting, in a predetermined size, a moving image display area in which the moving images can be displayed in the display screen, when it is determined that the moving image display area has a size different from the predetermined size based on moving image display area information obtained from the multimedia data; and
a media data display means for displaying the multimedia data, the media data display means displaying the moving images in the moving image display area having the predetermined size set by the moving image display area setting means, without changing their image size.

### Appendix 9

A media data display device for displaying, on a display screen, multimedia data comprising a plurality of media including moving images, comprising:
a moving image display area setting means for setting, in a predetermined size, a moving image display area in which the moving images can be displayed in the display screen, when it is determined that the moving image display area has an arbitrary size based on moving image display area information obtained from the multimedia data;
a scaling means for scaling the moving images with respect to the moving image display area having the predetermined size set by the moving image display area setting means, based on scaling specifying information that specifies a method for scaling the moving images; and
a media data display means for displaying the multimedia data, the media data display means displaying the moving images scaled by the scaling means in the moving image display area.

### Appendix 10

A media data display device for displaying, on a display screen, multimedia data comprising a plurality of media including moving images, comprising:
a moving image display area setting means for setting, in a predetermined size, a moving image display area in which the moving images can be displayed in the display screen, when it is determined that the moving image display area has a size different from the predetermined size based on moving image display area information obtained from the multimedia data;
a scaling means for scaling the moving images with respect to the moving image display area having the predetermined size set by the moving image display area setting means, based on scaling specifying information that specifies a method for scaling the moving images; and
a media data display means for displaying the multimedia data, the media data display means displaying the moving images scaled by the scaling means in the moving image display area.

### Appendix 11

A media data display method for displaying, on a display screen, multimedia data comprising a plurality of media including moving images, comprising:
a moving image display position determining step of determining a moving image display position, the moving image display position being a display position of the moving images; and
a media data display step of displaying the multimedia data, the media data display step displaying the moving images at the moving image display position determined by the moving image display position determining step, without changing their image size.

### Appendix 12

A media data display method for displaying, on a display screen, multimedia data comprising a plurality of media including moving images, comprising:
a moving image display area setting step of setting, in a predetermined size, a moving image display area in which the moving images can be displayed in the display screen, when it is determined that the moving image display area has an arbitrary size based on moving image display area information obtained from the multimedia data; and
a media data display step of displaying the multimedia data, the media data display step displaying the moving images in the moving image display area having the predetermined size set by the moving image display area setting step, without changing their image size.

### Appendix 13

A media data display method for displaying, on a display screen, multimedia data comprising a plurality of media including moving images, comprising:
a moving image display area setting step of setting, in a predetermined size, a moving image display area in which the moving images can be displayed in the display screen, when it is determined that the moving image display area has a size different from the predetermined size based on moving image display area information obtained from the multimedia data; and
a media data display step of displaying the multimedia data, the media data display step displaying the moving images in the moving image display area having the predetermined size set by the moving image display area setting step, without changing their image size.

### Appendix 14

A media data display method for displaying, on a display screen, multimedia data comprising a plurality of media including moving images, comprising:
a moving image display area setting step of setting, in a predetermined size, a moving image display area in which the moving images can be displayed in the display screen, when it is determined that the moving image display area has an arbitrary size based on moving image display area information obtained from the multimedia data;
a scaling step of scaling the moving images with respect to the moving image display area having the predetermined size set by the moving image display area setting step, based on scaling specifying information that specifies a method for scaling the moving images; and
a media data display step of displaying the multimedia data, the media data display step displaying the moving images scaled by the scaling step in the moving image display area.

### Appendix 15

A media data display method for displaying on a display screen, multimedia data comprising a plurality of media including moving images, comprising:
a moving image display area setting step of setting, in a predetermined size, a moving image display area in which the moving images can be displayed in the display screen, when it is determined that the moving image display area has a size different from the predetermined size based on moving image display area information obtained from the multimedia data;
a scaling step of scaling the moving images with respect to the moving image display area having the predetermined size set by the moving image display area setting step, based on scaling specifying information that specifies a method for scaling the moving images; and
a media data display step of displaying the multimedia data, the media data display step displaying the moving images scaled by the scaling step in the moving image display area.

### Appendix 16

A media data display program for performing, with a computer, a media data display method for displaying, on a display screen, multimedia data comprising a plurality of media including moving images,
wherein the media data display program lets the computer perform a media data display method comprising:
a moving image display position determining step of determining a moving image display position, the moving image display position being a display position of the moving images; and
a media data display step of displaying the multimedia data, the media data display step displaying the moving images at the moving image display position determined by the moving image display position determining step, without changing their image size.

### Appendix 17

A media data display program for performing, with a computer, a media data display method for displaying, on a display screen, multimedia data comprising a plurality of media including moving images,
wherein the media data display program lets the computer perform a media data display method comprising:
a moving image display area setting step of setting, in a predetermined size, a moving image display area in which the moving images can be displayed in the display screen, when it is determined that the moving image display area has an arbitrary size based on moving image display area information obtained from the multimedia data; and
a media data display step of displaying the multimedia data, the media data display step displaying the moving images in the moving image display area having the predetermined size set by the moving image display area setting step, without changing their image size.

### Appendix 18

A media data display program for performing, with a computer, a media data display method for displaying, on a display screen, multimedia data comprising a plurality of media including moving images,
wherein the media data display program lets the computer perform a media data display method comprising:
a moving image display area setting step of setting, in a predetermined size, a moving image display area in which the moving images can be displayed in the display screen, when it is determined that the moving image display area has a size different from the predetermined size based on moving image display area information obtained from the multimedia data; and
a media data display step of displaying the multimedia data, the media data display step displaying the moving images in the moving image display area having the predetermined size set by the moving image display area setting step, without changing their image size.

### Appendix 19

A media data display program for performing, with a computer, a media data display method for displaying, on a display screen, multimedia data comprising a plurality of media including moving images,
wherein the media data display program lets the computer perform a media data display method comprising:
a moving image display area setting step of setting, in a predetermined size, a moving image display area in which the moving images can be displayed in the display screen, when it is determined that the moving image display area has an arbitrary size based on moving image display area information obtained from the multimedia data;
a scaling step of scaling the moving images with respect to the moving image display area having the predetermined size set by the moving image display area setting step, based on scaling specifying information that specifies a method for scaling the moving images; and
a media data display step of displaying the multimedia data, the media data display step displaying the moving images scaled by the scaling step in the moving image display area.

### Appendix 20

A media data display program for performing, with a computer, a media data display method for displaying, on a display screen, multimedia data comprising a plurality of media including moving images,
wherein the media data display program lets the computer perform a media data display method comprising:
a moving image display area setting step of setting, in a predetermined size, a moving image display area in which the moving images can be displayed in the display screen, when it is determined that the moving image display area has a size different from the predetermined size based on moving image display area information obtained from the multimedia data;
a scaling step of scaling the moving images with respect to the moving image display area having the predetermined size set by the moving image display area setting step, based on scaling specifying information that specifies a method for scaling the moving images; and
a media data display step of displaying the multimedia data, the media data display step displaying the moving images scaled by the scaling step in the moving image display area.

### Description of appendices

The media data display device described in appendix 1 is a media data display device for displaying, on a display screen, multimedia data comprising a plurality of media including moving images, and comprises a moving image display position determining means and a media data display means. The moving image display position determining means determines a moving image display position, which is a display position of the moving images. The media data display means is a means for displaying the multimedia data, and displays the moving images at the moving image display position determined by the moving image display position determining means, without changing their image size.

Here, "display position" refers to, for example, a position in the display screen when the entire moving image is displayed, and refers to a position of the display area in the moving images when a portion of the moving image is displayed (hereinafter, the same applies in this section). In addition, "multimedia data" refers to, for example, an MP4 file in which video, audio, text, still images or the like are multiplexed and stored (hereinafter, the same applies in this section).

According to the media data display device of the present invention, the media data display means displays the moving images without changing their image size, so that the moving images are not uniformly scaled and displayed in a fixed area, but are displayed in a size intended by the creator of the multimedia data. Additionally, the processing load on the device can be reduced by displaying the moving images without scaling them. Furthermore, according to this media data display device, the moving image display position determining means determines the moving image display position, so that the moving images can be displayed at an appropriate position.

The media data display device described in appendix 2 is the media data display device according to appendix 1, wherein the multimedia data includes media display position information indicating a display position of a medium other than the moving images in the display screen. The moving image display position determining means determines the moving image display position in accordance with the media display position information. Here "medium other than the moving image" refers to, for example, text, still images and the like.

According to the media data display device of the present invention, the display position of the moving images is determined based on the display position of a medium other than the moving images, so that the moving images can be displayed at an appropriate position, with respect to the display position of the medium other than the moving images.

The media data display device described in appendix 3 is the media data display device according to appendix 1, and further comprises a moving image display position setting means capable of setting the moving image display position. The moving image display position determining means determines the moving image display position, based on the setting of the moving image position setting means.

The media data display device of the present invention further comprises a moving image display position setting means capable of setting the moving image display position and the moving image display position determining means determines the moving image display position, based on the setting of the moving image position setting means; therefore, for example, when the user sets the moving image display position determining means, the moving images can be displayed at a display position intended by the user.

The media data display device described in appendix 4 is the media data display device according to appendix 1, wherein the multimedia data includes priority display area information indicating a priority display area, which is an area displayed with priority in the moving images. The moving image display position determining means determines the moving image display position based on the priority display area information. Here, the priority display area information specifies, for example, the coordinates of the center of the priority display area.

According to the media data display device of the present invention, the multimedia data includes the priority display area information and the moving image display position determining means determines the moving image display position based on the priority display area information, so that an area of the moving images that is considered as highly significant can be displayed.

The media data display device described in appendix 5 is the media data display device according to appendix 4, wherein the multimedia data includes moving image display area information indicating a moving image display area in which the moving images can be displayed in the display screen. The priority display area information is information indicating the center of the priority display area. The moving image display position determining means determines the moving image display position such that the center of the moving image display area coincides with the center of the priority display area, based on the moving image display area information and the priority display area information.

According to the media data display device of the present invention, the priority display area information is information indicating the center of the priority display area, and the moving image display position determining means determines the moving image display position such that the center of the moving image display area coincides with the center of the priority display area; therefore, an area of the moving images that is considered as highly significant can be appropriately displayed.

The media data display device of appendix 6 is the media data display device according to appendix 4 or 5, wherein the multimedia data includes moving image display area information indicating a moving image display area in which the moving images can be displayed in the display screen. The moving image display position determining means determines the moving image display position such that the priority display area is included and that as large an area as possible of the moving images is displayed.

According to the media data display device of the present invention, the moving image display position determining means determines the moving image display position such that the priority display area is included and that as large an area as possible of the moving images is displayed; accordingly, the moving images can be displayed by effectively utilizing the moving image display area, while reflecting the intention of the creator of the multimedia data.

The media data display device described in appendix 7 is a media data display device for displaying, on a display screen, multimedia data comprising a plurality of media including moving images, and comprises a moving image display area setting means and a media data display means. The moving image display area setting means sets, in a predetermined size, a moving image display area in which the moving images can be displayed in the display screen, when it is determined that the moving image display area has an arbitrary size based on moving image display area information obtained from the multimedia data. The media data display means is a means for displaying the multimedia data, and displays the moving images in the moving image display area having the predetermined size set by the moving image display area setting means, without changing their image size. It should be noted that the present invention can also be applied to a device having a scaling means and capable of selecting whether to perform scaling or not.

According to the media data display device of the present invention, the media data display means displays the moving images without changing their image size, so that the moving images are not uniformly scaled and displayed in a fixed area, but are displayed in a size intended by the creator of the multimedia data. Additionally, the processing load on the device can be reduced by displaying the moving images without scaling them. Furthermore, since the moving image display area setting means sets the moving image display area in a predetermined size in a predetermined situation, the moving images can be displayed in a moving image display area appropriate for the media data display device.

The media data display device described in appendix 8 is a media data display device for displaying, on a display screen, multimedia data comprising a plurality of media including moving images, and comprises a moving image display area setting means and a media data display means. The moving image display area setting means sets, in a predetermined size, a moving image display area in which the moving images can be displayed in the display screen, when it is determined that the moving image display area has a size different from the predetermined size based on moving image display area information obtained from the multimedia data. The media data display means is a means for displaying the multimedia data, and displays the moving images in the moving image display area having the predetermined size set by the moving image display area setting means, without changing their image size. It should be noted that the present invention can also be applied to a device having a scaling means and capable of selecting whether to perform scaling or not.

According to the media data display device of the present invention, the media data display means displays the moving images without changing their image size, so that the moving images are not uniformly scaled and displayed in a fixed area, but are displayed in a size intended by the creator of the multimedia data. Additionally, the processing load on the device can be reduced by displaying the moving images without scaling them. Furthermore, since the moving image display area setting means sets the moving image display area in a predetermined size, the moving images can be appropriately displayed in a moving image display area used by the user.

The media data display device described in appendix 9 is a media data display device for displaying, on a display screen, multimedia data comprising a plurality of media including moving images, and comprises a moving image display area setting means, a scaling means and a media data display means. The moving image display area setting means sets, in a predetermined size, a moving image display area in which the moving images can be displayed in the display screen, when it is determined that the moving image display area has an arbitrary size based on moving image display area information obtained from the multimedia data. The scaling means scales the moving images with respect to the moving image display area having the predetermined size set by the moving image display area setting means, based on scaling specifying information that specifies a method for scaling the moving images. The media data display means is a means for displaying the multimedia data, and displays the moving images scaled by the scaling means in the moving image display area.

According to the media data display device of the present invention, the moving image display area setting means sets, in a predetermined size, a moving image display area in which the moving images can be displayed in the display screen, when it is determined that the moving image display area has an arbitrary size based on moving image display area information obtained from the multimedia data, and then the scaling means scales the moving images with respect to the moving image display area. Thus, the moving image display area setting means sets the moving image display area in a predetermined size, so that the moving images can be appropriately displayed in a moving image display area used by the user.

The media data display device described in appendix 10 is a media data display device for displaying, on a display screen, multimedia data comprising a plurality of media including moving images, and comprises a moving image display area setting means, a scaling means and a media data display means. The moving image display area setting means sets, in a predetermined size, a moving image display area in which the moving images can be displayed in the display screen, when it is determined that the moving image display area has a size different from the predetermined size based on moving image display area information obtained from the multimedia data. The scaling means scales the moving images with respect to the moving image display area having the predetermined size set by the moving image display area setting means, based on scaling specifying information that specifies a method for scaling the moving images. The media data display means is a means for displaying the multimedia data, and displays the moving images scaled by the scaling means in the moving image display area.

According to the media data display device of the present invention, the moving image display area setting means sets, in a predetermined size, a moving image display area in which the moving images can be displayed in the display screen, when it is determined that the moving image display area has a size different from the predetermined size based on moving image display area information obtained from the multimedia data, and then the scaling means scales the moving images with respect to the moving image display area. Thus, the moving image display area setting means sets the moving image display area in a predetermined size, so that the moving images can be appropriately displayed in a moving image display area used by the user.

The media data display method described in appendix 11 is a media data display method for displaying, on a display screen, multimedia data comprising a plurality of media including moving images, and comprises a moving image display position determining step and a media data display step. The moving image display position determining step determines a moving image display position, which is a display position of the moving images. The media data display step is a step of displaying the multimedia data, and displays the moving images at the moving image display position determined by the moving image display position determining step, without changing their image size.

According to the media data display method of the present invention, the media data display step displays the moving images without changing their image size, so that the moving images are not uniformly scaled and displayed in a fixed area, but are displayed in a size intended by the creator of the multimedia data. Additionally, the processing load can be reduced by displaying the moving images without scaling them. Furthermore, according to this media data display method, the moving image display position determining step determines the moving image display position, so that the moving images can be displayed at an appropriate position.

The media data display method described in appendix 12 is a media data display method for displaying, on a display screen, multimedia data comprising a plurality of media including moving images, and comprises a moving image display area setting step and a media data display step. The moving image display area setting step sets, in a predetermined size, a moving image display area in which the moving images can be displayed in the display screen, when it is determined that the moving image display area has an arbitrary size based on moving image display area information obtained from the multimedia data. The media data display step is a step of displaying the multimedia data, and displays the moving images in the moving image display area having the predetermined size set by the moving image display area setting step, without changing their image size.

According to the media data display method of the present invention, the media data display step displays the moving images without changing their image size, so that the moving images are not uniformly scaled and displayed in a fixed area, but are displayed in a size intended by the creator of the multimedia data. In addition, the processing load can be reduced by displaying the moving images without scaling them. Furthermore, since the moving image display area setting step sets the moving image display area in a predetermined size in a predetermined situation, the moving images can be displayed in an appropriate moving image display area.

The media data display method described in appendix 13 is a media data display method for displaying, on a display screen, multimedia data comprising a plurality of media including moving images, and comprises a moving image display area setting step and a media data display step. The moving image display area setting step sets, in a predetermined size, a moving image display area in which the moving images can be displayed in the display screen, when it is determined that the moving image display area has a size different from the predetermined size based on moving image display area information obtained from the multimedia data. The media data display step is a step of displaying the multimedia data, and displays the moving images in the moving image display area having the predetermined size set by the moving image display area setting step, without changing their image size.

According to the media data display method of the present invention, the media data display step displays the moving images without changing their image size, so that the moving images are not uniformly scaled and displayed in a fixed area, but are displayed in a size intended by the creator of the multimedia data. In addition, the processing load can be reduced by displaying the moving images without scaling them. Furthermore, since the moving image display area setting step sets the moving image display area in a predetermined size, the moving images can be appropriately displayed in the moving image display area of a device used by the user.

The media data display method described in appendix 14 is a media data display method for displaying, on a display screen, multimedia data comprising a plurality of media including moving images, and comprises a moving image display area setting step, a scaling step and a media data display step. The moving image display area setting step sets, in a predetermined size, a moving image display area in which the moving images can be displayed in the display screen, when it is determined that the moving image display area has an arbitrary size based on moving image display area information obtained from the multimedia data. The scaling step scales the moving images with respect to the moving image display area having the predetermined size set by the moving image display area setting step, based on scaling specifying information that specifies a method for scaling the moving images. The media data display step is a step of displaying the multimedia data, and displays the moving images scaled by the scaling step in the moving image display area.

According to the media data display method of the present invention, the moving image display area setting step sets, in a predetermined size, a moving image display area in which the moving images can be displayed in the display screen, when it is determined that the moving image display area has an arbitrary size based on moving image display area information obtained from the multimedia data, and then the scaling step scales the moving images with respect to the moving image display area. Thus, the moving image display area setting step sets the moving image display area in a predetermined size, so that the moving images can be appropriately displayed in a moving image display area used by the user.

The media data display method described in appendix 15 is a method for displaying, on a display screen, multimedia data comprising a plurality of media including moving images, and comprises a moving image display area setting step, a scaling step and a media data display step. The moving image display area setting step sets, in a predetermined size, a moving image display area in which the moving images can be displayed in the display screen, when it is determined that the moving image display area has a size different from the predetermined size based on moving image display area information obtained from the multimedia data. The scaling step scales the moving images with respect to the moving image display area having the predetermined size set by the moving image display area setting step, based on scaling specifying information that specifies a method for scaling the moving images. The media data display step is a step of displaying the multimedia data, and displays the moving images scaled by the scaling step in the moving image display area.

According to the media data display method of the present invention, the moving image display area setting step sets, in a predetermined size, a moving image display area in which the moving images can be displayed in the display screen, when it is determined that the moving image display area has a size different from the predetermined size based on moving image display area information obtained from the multimedia data, and then the scaling step scales the moving images with respect to the moving image display area. Thus, the moving image display area setting step sets the moving image display area in a predetermined size, so that the moving images can be appropriately displayed in a moving image display area used by the user.

The media data display program described in appendix 16 is a media data display program for performing, with a computer, a media data display method for displaying, on a display screen, multimedia data comprising a plurality of media including moving images, and the media data display program lets the computer perform a media data display method comprising a moving image display position determining step and a media data display step. The moving image display position determining step determines a moving image display position, which is a display position of the moving images. The media data display step is a step of displaying the multimedia data, and displays the moving images at the moving image display position determined by the moving image display position determining step, without changing their image size.

According to the media data display program of the present invention, the media data display step displays the moving images without changing their image size, so that the moving images are not uniformly scaled and displayed in a fixed area, but are displayed in a size intended by the creator of the multimedia data. Additionally, the processing load can be reduced by displaying the moving images without scaling them. Furthermore, according to this media data display program, the moving image display position determining step determines the moving image display position, so that the moving images can be displayed at an appropriate position.

The media data display program described in appendix 17 is a media data display program for performing, with a computer, a media data display method for displaying, on a display screen, multimedia data comprising a plurality of media including moving images, and the media data display program lets the computer perform a media data display method comprising a moving image display area setting step and a media data display step. The moving image display area setting step sets, in a predetermined size, a moving image display area in which the moving images can be displayed in the display screen, when it is determined that the moving image display area has an arbitrary size based on moving image display area information obtained from the multimedia data. The media data display step is a step of displaying the multimedia data, and displays the moving images in the moving image display area having the predetermined size set by the moving image display area setting step, without changing their image size.

According to the media data display program of the present invention, the media data display step displays the moving images without changing their image size, so that the moving images are not uniformly scaled and displayed in a fixed area, but are displayed in a size intended by the creator of the multimedia data. Additionally, the processing load can be reduced by displaying the moving images without scaling them. Furthermore, since the moving image display area setting step sets the moving image display area in a predetermined size in a predetermined situation, the moving images can be displayed in an appropriate moving image display area.

The media data display program described in appendix 18 is a media data display program for performing, with a computer, a media data display method for displaying, on a display screen, multimedia data comprising a plurality of media including moving images, and the media data display program lets the computer perform a media data display method comprising a moving image display area setting step and a media data display step. The moving image display area setting step sets, in a predetermined size, a moving image display area in which the moving images can be displayed in the display screen, when it is determined that the moving image display area has a size different from the predetermined size based on moving image display area information obtained from the multimedia data. The media data display step is a step of displaying the multimedia data, and displays the moving images in the moving image display area having the predetermined size set by the moving image display area setting step, without changing their image size.

According to the media data display program of the present invention, the media data display step displays the moving images without changing their image size, so that the moving images are not uniformly scaled and displayed in a fixed area, but are displayed in a size intended by the creator of the multimedia data. Additionally, the processing load can be reduced by displaying the moving images without scaling them. Furthermore, since the moving image display area setting step sets the moving image display area in a predetermined size, the moving images can be appropriately displayed in the moving image display area of a device used by the user.

The media data display program described in appendix 19 is a media data display program for performing, with a computer, a media data display method for displaying, on a display screen, multimedia data comprising a plurality of media including moving images, and the media data display program lets the computer perform a media data display method comprising a moving image display area setting step, a scaling step and a media data display step. The moving image display area setting step sets, in a predetermined size, a moving image display area in which the moving images can be displayed in the display screen, when it is determined that the moving image display area has an arbitrary size based on moving image display area information obtained from the multimedia data. The scaling step scales the moving images with respect to the moving image display area having the predetermined size set by the moving image display area setting step, based on scaling specifying information that specifies a method for scaling the moving images. The media data display step is a step of displaying the multimedia data, and displays the moving images scaled by the scaling step in the moving image display area.

According to the media data display program of the present invention, the moving image display area setting step sets, in a predetermined size, a moving image display area in which the moving images can be displayed in the display screen, when it is determined that the moving image display area has an arbitrary size based on moving image display area information obtained from the multimedia data, and then the scaling step scales the moving images with respect to the moving image display area. Thus, the moving image display area setting step sets the moving image display area in a predetermined size, so that the moving images can be appropriately displayed in a moving image display area used by the user.

The media data display program described in appendix 20 is a media data display program for performing, with a computer, a media data display method for displaying, on a display screen, multimedia data comprising a plurality of media including moving images, and the media data display program lets the computer perform a media data display method comprising a moving image display area setting step, a scaling step and a media data display step. The moving image display area setting step sets, in a predetermined size, a moving image display area in which the moving images can be displayed in the display screen, when it is determined that the moving image display area has a size different from the predetermined size based on moving image display area information obtained from the multimedia data. The scaling step scales the moving images with respect to the moving image display area having the predetermined size set by the moving image display area setting step, based on scaling specifying information that specifies a method for scaling the moving images. The media data display step is a step of displaying the multimedia data, and displays the moving images scaled by the scaling step in the moving image display area.

According to the media data display program of the present invention, the moving image display area setting step sets, in a predetermined size, a moving image display area in which the moving images can be displayed in the display screen, when it is determined that the moving image display area has a size different from the predetermined size based on moving image display area information obtained from the multimedia data, and then the scaling step scales the moving images with respect to the moving image display area. Thus, the moving image display area setting means sets the moving image display area in a predetermined size, so that the moving images can be appropriately displayed in a moving image display area used by the user.

### Industrial Applicability

The media data display device, the media data display method and the media data display program according to the present invention can display, on a display screen, multimedia data made up of a plurality of media including moving images in a variety of display methods, so that they are useful in the fields described above.

## Claims

1. A media data display device for displaying, on a display screen, multimedia data comprising a plurality of media including moving images, comprising:
a scaling determining unit operable to determine whether to display the moving images after changing their image size or to display the moving images without changing their image size; and
a media data display unit operable to display multimedia data, the media data display unit displaying the moving images after switching whether to perform scaling or not based on a determination result from the scaling determining unit.

2. The media data display device according to claim 1,
wherein the scaling determining unit makes the determination based on scaling determining information included in the multimedia data.

3. The media data display device according to claim 2,
wherein the scaling determining information is flag information indicating whether to perform scaling.

4. The media data display device according to claim 1,
wherein the scaling determining unit makes the determination based on the remaining capacity of a battery with which the media data display device is provided.

5. The media data display device according to claim 1,
wherein the scaling determining unit includes a scaling setting unit operable to set whether to display the moving images after changing their image size or to display the moving images without changing their image size.

6. The media data display device according to claim 1,
wherein the scaling determining unit makes the determination based on an attribute of the moving images.

7. A media data display device for displaying, on a display screen, multimedia data comprising a plurality of media including moving images, comprising:
a scaling unit operable to scale the moving images with respect to a moving image display area in which the moving images can be displayed in the display screen, based on scaling specifying information that specifies a method for scaling the moving images; and
a media data display unit operable to display the multimedia data, the media data display unit displaying the moving images scaled by the scaling unit in the moving image display area.

8. The media data display device according to claim 7,
wherein the scaling unit obtains the scaling specifying information from the multimedia data.

9. The media data display device according to claim 7 or 8, further comprising:
a scaling determining unit operable to determine whether to display the moving images after changing their image size or to display the moving images without changing their image size,
wherein the media data display unit displays the moving images after switching whether to perform scaling or not based on a determination result from the scaling determining unit.

10. The media data display device according to claim 7, further comprising
a scaling method setting unit operable to set the scaling specifying information.

11. A media data display method for displaying, on a display screen, multimedia data comprising a plurality of media including moving images, comprising:
a scaling determining process of determining whether to display the moving images after changing their image size or to display the moving images without changing their image size; and
a media data display process of displaying the multimedia data, the media data display process displaying the moving images based on a determination result from the scaling determining process.

12. A media data display method for displaying, on a display screen, multimedia data comprising a plurality of media including moving images, comprising:
a scaling process of scaling the moving images with respect to a moving image display area in which the moving images can be displayed in the display screen, based on scaling specifying information that specifies a method for scaling the moving images; and
a media data display process of displaying the multimedia data, the media data display process displaying the moving images scaled by the scaling process in the moving image display area.

13. A media data display program for performing, with a computer, a media data display method for displaying, on a display screen, multimedia data comprising a plurality of media including moving images,
wherein the media data display program lets the computer perform a media display method comprising:
a scaling determining process of determining whether to display the moving images after changing their image size or to display the moving images without changing their image size; and
a media data display process of displaying the multimedia data, the media data display process displaying the moving images based on a determination result from the scaling determining process.

14. A media data display program for performing, with a computer, a media data display method for displaying, on a display screen, multimedia data comprising a plurality of media including moving images,
wherein the media data display program lets the computer perform a media data display method comprising:
a scaling process of scaling the moving images with respect to a moving image display area in which the moving images can be displayed in the display screen, based on scaling specifying information that specifies a method for scaling the moving images; and
a media data display process of displaying the multimedia data, the media data display process displaying the moving images scaled by the scaling process in the moving image display area.
